# EUROPEAN PATENT APPLICATION

(11) **EP 4 783 650 A1**
(43) Date of publication of application: **29.07.2026**
(21) Application number: 24870822.4
(22) Date of filing: 25.09.2024
(51) Int. Cl.: H04W 24/08

(54) **COMMUNICATION METHOD, APPARATUS, AND SYSTEM**

(30) Priority: 28.09.2023 CN 202311287568
(71) Applicant: HUAWEI TECHNOLOGIES CO., LTD., Shenzhen 518129 (CN)
(72) Inventor: TANG, Zhuqing, Shenzhen, Guangdong 518129 (CN); HUANG, Lei, Shenzhen, Guangdong 518129 (CN); DU, Rui, Shenzhen, Guangdong 518129 (CN); NAREN, Gerile, Shenzhen, Guangdong 518129 (CN); HAN, Xiao, Shenzhen, Guangdong 518129 (CN)
(74) Representative: Goddar, Heinz J.
(86) International application number: PCT/CN2024/121240
(87) International publication number: WO 2025/067278

(57) **Abstract**

Embodiments of this application disclose a communication method and apparatus, and a system, and relate to the field of communication technologies, so that a sensing measurement session may be set up in a multi-link scenario. The method includes: sending a multi-link sensing measurement request frame to a second multi-link device, where the multi-link sensing measurement request frame is used to request to set up a sensing measurement session, and the sensing measurement session includes one link or a plurality of links; and receiving a multi-link sensing measurement response frame from the second multi-link device.

## Description

This application claims priority to Chinese Patent Application No. 202311287568.1, filed with the China National Intellectual Property Administration on September 28, 2023 and entitled "COMMUNICATION METHOD AND APPARATUS, AND SYSTEM", which is incorporated herein by reference in its entirety.

### TECHNICAL FIELD

Embodiments of this application relate to the field of communication technologies, and in particular, to a communication method and apparatus, and a system.

### BACKGROUND

A wireless local area network (wireless local area network, WLAN) sensing technology can be used to sense a feature of a target, for example, a direction, a speed, or motion of the target. In the WLAN sensing technology, sensing measurement is presented in a form of a session. A sensing measurement session needs to be set up between a sensing initiator and a sensing responder to perform sensing measurement on the target.

However, a current solution for setting up a sensing measurement session is specific to a single-link scenario. However, there is no solution for setting up a sensing measurement session in a multi-link scenario.

### SUMMARY

Embodiments of this application provide a communication method and apparatus, and a system, so that a sensing measurement session may be set up in a multi-link scenario.

According to a first aspect, a communication method is provided. The method may be performed by a first multi-link device, or may be performed by a component of a first multi-link device, for example, a processor, a chip, or a chip system of the first multi-link device, or may be implemented by a logic module or software that can implement all or some functions of a first multi-link device. The following uses an example in which the method is performed by the first multi-link device for description. The communication method includes: sending a multi-link sensing measurement request frame to a second multi-link device, where the multi-link sensing measurement request frame is used to request to set up a sensing measurement session, and the sensing measurement session includes one link or a plurality of links; and receiving a multi-link sensing measurement response frame from the second multi-link device.

According to the communication method provided in this embodiment of this application, a multi-link device may initiate sensing measurement session setup, and another multi-link device responds. In this way, the sensing measurement session may be set up in a multi-link scenario, thereby filling a gap in a current multi-link scenario in which there is no solution for setting up a sensing measurement session.

According to a second aspect, a communication method is provided. The method may be performed by a second multi-link device, or may be performed by a component of a second multi-link device, for example, a processor, a chip, or a chip system of a second multi-link device, or may be implemented by a logic module or software that can implement all or some functions of a second multi-link device. The following uses an example in which the method is performed by the second multi-link device for description. The communication method includes: receiving a multi-link sensing measurement request frame from a first multi-link device, where the multi-link sensing measurement request frame is used to request to set up a sensing measurement session, and the sensing measurement session includes one link or a plurality of links; and sending a multi-link sensing measurement response frame to the first multi-link device.

According to the communication method provided in this embodiment of this application, a multi-link device may initiate sensing measurement session setup, and another multi-link device responds. In this way, the sensing measurement session may be set up in a multi-link scenario, thereby filling a gap in a current multi-link scenario in which there is no solution for setting up a sensing measurement session.

With reference to the first aspect or the second aspect, in a possible implementation, the multi-link sensing measurement request frame includes a sensing measurement parameter, and the sensing measurement parameter includes a public parameter and/or a specific parameter, where the public parameter is a parameter shared by the link or the plurality of links, and the specific parameter is a dedicated parameter of a part of links in the link or the plurality of links.

According to this solution, the sensing measurement parameter may be classified into the public parameter and the specific parameter, which is more applicable to the multi-link scenario.

With reference to the first aspect or the second aspect, in a possible implementation, the public parameter includes recommended report link information, and the recommended report link information indicates a link for reporting sensing data.

According to this solution, the sensing data may be reported through a recommended report link, and sensing measurement performance may be improved in some scenarios.

With reference to the first aspect or the second aspect, the public parameter includes session setup condition information, and the session setup condition information indicates a condition for successfully setting up the sensing session.

According to this solution, the first multi-link device may indicate, based on the session condition information, the condition for successfully setting up the sensing session to the second multi-link device.

With reference to the first aspect or the second aspect, the public parameter includes mandatory link information, and the mandatory link information indicates a mandatory link for successfully setting up the sensing session.

According to this solution, the mandatory link for successfully setting up the sensing session may be indicated based on the mandatory link information.

With reference to the first aspect or the second aspect, the specific parameter includes identification information of the part of links.

According to this solution, which link may be indicated based on the identification information of the part of links.

With reference to the first aspect or the second aspect, the multi-link sensing measurement request frame includes a sensing subelement, and the sensing subelement includes a public parameter and/or a specific parameter, where the public parameter is a parameter shared by the link or the plurality of links, and the specific parameter is a dedicated parameter of a part of links in the link or the plurality of links.

According to this solution, the public parameter and/or the specific parameter may be carried in the sensing subelement.

With reference to the first aspect or the second aspect, the public parameter includes reference time window information, and a reference time window is used to determine a sensing time window of each of the link or the plurality of links, where the sensing time window is used to perform sensing measurement exchange.

According to this solution, one piece of public reference time window information may be configured, and the sensing time window of each link is determined based on the reference time window.

With reference to the first aspect or the second aspect, the specific parameter includes identification information of the part of links and sensing time window information corresponding to each link in the part of links, where a sensing time window is used to perform sensing measurement exchange.

According to this solution, a corresponding sensing time window may be configured for each link.

With reference to the first aspect or the second aspect, the public parameter includes the reference time window information, and the specific parameter includes identification information of the part of links and time window offset information, where the time window offset information indicates an offset of the sensing time window of the part of links relative to the reference time window.

According to this solution, the sensing time window that has an offset relative to the reference time window may be configured for a link based on the time window offset information.

With reference to the first aspect or the second aspect, the public parameter includes the reference time window information, and the specific parameter includes identification information of the part of links and time window mode information, where the time window mode information indicates whether the sensing time window of the part of links is the same as the reference time window.

According to this solution, whether the sensing time window of the link is the same as the reference time window may be determined based on the time window mode information, to configure the corresponding sensing time window for the link.

With reference to the first aspect or the second aspect, the specific parameter includes identification information of the part of links and common time window indication information, and the common time window indication information indicates whether a sensing time window of a first link is capable of being used to determine a sensing time window of another link in the plurality of links.

According to this solution, a sensing time window of a link may be used as a reference time window of another link based on the common time window indication information.

With reference to the first aspect or the second aspect, the multi-link sensing measurement request frame includes recommended link information, and the recommended link information indicates one link or a plurality of links used by the second multi-link device to send a sensing measurement query frame, where the sensing measurement query frame indicates that the second multi-link device requests to participate in sensing measurement.

According to this solution, the first multi-link device may indicate the link or the plurality of links used by the second multi-link device to send the sensing measurement query frame. This avoids a situation that, in some scenarios, when the first multi-link device wants to deactivate a link previously used by the second multi-link device to send the sensing measurement query frame, the second multi-link device still sends a sensing measurement query frame on the previous link, resulting in a failure of sending the sensing measurement query frame.

With reference to the first aspect or the second aspect, the recommended link information is carried in a sensing comeback information field.

With reference to the first aspect or the second aspect, the multi-link sensing measurement response frame includes first indication information and second indication information, where the first indication information indicates that a part of links in a plurality of links included in the second multi-link device supports setup of the sensing measurement session, and the second indication information includes identification information of the part that is of links and that supports setup of the sensing measurement session.

According to this solution, the multi-link sensing measurement response frame may indicate support of the second multi-link device for setting up the sensing measurement session.

With reference to the first aspect or the second aspect, the first indication information is carried in a status code field.

With reference to the first aspect or the second aspect, the first multi-link device is an access point multi-link device, and the second multi-link device is a non-access point multi-link device; or the first multi-link device is a non-access point multi-link device, and the second multi-link device is an access point multi-link device.

According to a third aspect, a communication apparatus is provided, to implement the foregoing methods. The communication apparatus may be the first multi-link device in the first aspect or any implementation of the first aspect, or an apparatus including the first multi-link device, or an apparatus included in the first multi-link device, for example, a chip. Alternatively, the communication apparatus may be the second multi-link device in the second aspect or any implementation of the second aspect, or an apparatus including the second multi-link device, or an apparatus included in the second multi-link device, for example, a chip. The communication apparatus includes a corresponding module, unit, or means (means) for implementing the foregoing method. The module, unit, or means may be implemented by using hardware or software, or implemented by using hardware by executing corresponding software. The hardware or the software includes one or more modules or units corresponding to the foregoing functions.

In some possible designs, the communication apparatus may include a transceiver module. The transceiver module may also be referred to as a transceiver unit, and is configured to implement a sending function and/or a receiving function in any one of the first aspect and the possible implementations of the first aspect. The transceiver module may include a transceiver circuit, a transceiver machine, a transceiver, or a communication interface. In a possible design, the communication apparatus may include a processing module. The processing module may be configured to implement a processing function in any one of the first aspect or the second aspect and the possible implementations of the first aspect or the second aspect.

In some possible designs, the transceiver module includes a sending module and a receiving module, respectively configured to implement a sending function and a receiving function in any one of the first aspect or the second aspect and the possible implementations of the first aspect or the second aspect.

According to a fourth aspect, a communication apparatus is provided, including a processor and a memory. The memory is configured to store computer instructions. When the processor executes the instructions, the communication apparatus is enabled to perform the method according to any one of the foregoing aspects. The communication apparatus may be the first multi-link device in the first aspect or any implementation of the first aspect, or an apparatus including the first multi-link device, or an apparatus included in the first multi-link device, for example, a chip. Alternatively, the communication apparatus may be the second multi-link device in the second aspect or any implementation of the second aspect, or an apparatus including the second multi-link device, or an apparatus included in the second multi-link device, for example, a chip.

According to a fifth aspect, a communication apparatus is provided, including a processor and a communication interface. The communication interface is configured to communicate with a module outside the communication apparatus. The processor is configured to execute a computer program or instructions, to enable the communication apparatus to perform the method according to any one of the foregoing aspects. The communication apparatus may be the first multi-link device in the first aspect or any implementation of the first aspect, or an apparatus including the first multi-link device, or an apparatus included in the first multi-link device, for example, a chip. Alternatively, the communication apparatus may be the second multi-link device in the second aspect or any implementation of the second aspect, or an apparatus including the second multi-link device, or an apparatus included in the second multi-link device, for example, a chip.

According to a sixth aspect, a communication apparatus is provided, including at least one processor. The processor is configured to execute a computer program or instructions stored in a memory, to enable the communication apparatus to perform the method according to any one of the foregoing aspects. The memory may be coupled to the processor, or may be independent of the processor. The communication apparatus may be the first multi-link device in the first aspect or any implementation of the first aspect, or an apparatus including the first multi-link device, or an apparatus included in the first multi-link device, for example, a chip. Alternatively, the communication apparatus may be the second multi-link device in the second aspect or any implementation of the second aspect, or an apparatus including the second multi-link device, or an apparatus included in the second multi-link device, for example, a chip.

According to a seventh aspect, a computer-readable storage medium is provided. The computer-readable storage medium stores a computer program or instructions. When the computer program or the instructions are run on a communication apparatus, the communication apparatus is enabled to perform the method according to any one of the foregoing aspects or any one of the implementations of the foregoing aspects.

According to an eighth aspect, a computer program product including instructions is provided. When the computer program product is run on a communication apparatus, the communication apparatus is enabled to perform the method according to any one of the foregoing aspects or any one of the implementations of the foregoing aspects.

According to a ninth aspect, a communication apparatus is provided (for example, the communication apparatus may be a chip or a chip system). The communication apparatus includes a processor, configured to implement a function in any one of the foregoing aspects or any one of the implementations of the foregoing aspects.

In some possible designs, the communication apparatus includes a memory, and the memory is configured to store necessary program instructions and data.

In some possible designs, when the apparatus is a chip system, the apparatus may include a chip, or may include a chip and another discrete device.

It may be understood that, when the communication apparatus in any one of the third aspect to the sixth aspect is a chip, the foregoing sending action/function may be understood as an output, and the foregoing receiving action/function may be understood as an input.

For technical effects achieved by any implementation of the third aspect to the ninth aspect, refer to technical effects achieved by corresponding implementations of the first aspect or the second aspect. Details are not described herein again.

It should be noted that various possible implementations of any one of the foregoing aspects may be combined, provided that there is no conflict between the solutions.

According to a tenth aspect, a communication system is provided. The communication system includes the first multi-link device that performs the method in the first aspect and the second multi-link device that performs the method in the second aspect.

It should be noted that various possible implementations of any one of the foregoing aspects may be combined, provided that there is no conflict between the solutions.

### BRIEF DESCRIPTION OF DRAWINGS

FIG. 1 is a diagram of a public field structure and a sensing measurement parameter element structure of a sensing measurement request frame according to an embodiment of this application;
FIG. 2 is a diagram of an action field structure of a sensing measurement response frame according to an embodiment of this application;
FIG. 3 is a diagram of a structure of a sensing availability window according to an embodiment of this application;
FIG. 4 is a diagram of a frame structure of an RSTA availability window element according to an embodiment of this application;
FIG. 5 is an example diagram of an MLD system according to an embodiment of this application;
FIG. 6 is a diagram of a communication system according to an embodiment of this application;
FIG. 7 is a schematic flowchart of a communication method according to an embodiment of this application;
FIG. 8 is a diagram of a structure of a multi-link sensing measurement parameter element according to an embodiment of this application;
FIG. 9 is a diagram of a possible structure of a per-station profile field according to an embodiment of this application;
FIG. 10 is a diagram of a possible structure of a common information field according to an embodiment of this application;
FIG. 11 is a diagram of another possible structure of a common information field according to an embodiment of this application;
FIG. 12 is a diagram of still another possible structure of a common information field according to an embodiment of this application;
FIG. 13 is a diagram of a structure of another multi-link sensing measurement parameter element according to an embodiment of this application;
FIG. 14 is a diagram of another possible structure of a per-station profile according to an embodiment of this application;
FIG. 15 is a diagram of Manner 1 in which time window offset information indicates a sensing time window of a corresponding link according to an embodiment of this application;
FIG. 16 is a diagram of Manner 2 in which time window offset information indicates a sensing time window of a corresponding link according to an embodiment of this application;
FIG. 17 is a diagram of Manner 3 in which time window offset information indicates a sensing time window of a corresponding link according to an embodiment of this application;
FIG. 18 is a diagram of independently setting sensing time windows for three links based on sensing time window information according to an embodiment of this application;
FIG. 19 is a diagram of a possible structure of a TB sensing specific subelement included in a multi-link sensing subelement according to an embodiment of this application;
FIG. 20 is a diagram of another possible structure of a TB sensing specific subelement included in a multi-link sensing subelement according to an embodiment of this application;
FIG. 21 is a diagram of a structure of an example TB sensing subelement according to an embodiment of this application;
FIG. 22 is a diagram of a structure of another example TB sensing subelement according to an embodiment of this application;
FIG. 23 is a diagram of a structure of an example non-TB sensing specific subelement according to an embodiment of this application;
FIG. 24 is a diagram of a structure of a multi-link sensing measurement parameter element according to an embodiment of this application;
FIG. 25 is a diagram of a possible structure of sensing comeback information according to an embodiment of this application;
FIG. 26 is a diagram of another possible structure of sensing comeback information according to an embodiment of this application;
FIG. 27 is a diagram of a possible structure of a multi-link sensing measurement request frame according to an embodiment of this application;
FIG. 28 is a diagram of an example structure of a multi-link sensing measurement response frame according to an embodiment of this application;
FIG. 29 is a diagram of composition of a communication apparatus according to an embodiment of this application; and
FIG. 30 is a diagram of a hardware structure of a communication apparatus according to an embodiment of this application.

### DESCRIPTION OF EMBODIMENTS

For ease of understanding of technical solutions in embodiments of this application, the following first briefly describes technologies related to this application.

### 1. WLAN sensing (WLAN sensing):

WLAN sensing means that a device capable of WLAN sensing uses a received radio signal to determine a feature of a target (for example, an object, an animal, or a person) in a given environment. The feature includes a distance, a direction, a speed, motion, behavior, and the like of the target.

In a next-generation wireless standard for WLAN sensing, in 802.1 1bf defined by the Institute of Electrical and Electronics Engineers (Institute of Electrical and Electronics Engineers, IEEE), there are the following four roles:
a sensing initiator (sensing initiator): a device that initiates sensing behavior;
a sensing responder (sensing responder): a device that responds to the sensing behavior initiated by the sensing initiator and participates in the sensing behavior;
a sensing transmitter (sensing transmitter, sensing TX): a device that sends a sensing physical layer convergence protocol (physical layer convergence protocol, PLCP) protocol data unit (PLCP protocol data unit, PPDU); and
a sensing receiver (sensing receiver, sensing RX): a device that receives the sensing PPDU.

The following describes WLAN sensing in detail.

Currently, WLAN sensing may be classified into two types: a sensing procedure (sensing procedure) and a sensing by proxy (sensing by proxy, SBP) procedure (SBP procedure). In the sensing procedure, if a device wants to initiate sensing measurement, the device serves as a sensing initiator to initiate sensing measurement. In the SBP procedure, one device may request another device to initiate sensing measurement on behalf of the device, and send a measurement report to the device after measurement is completed. For example, if a device A initiates sensing measurement on behalf of a device B, the device A is a sensing initiator (in the SBP procedure, the sensing initiator may also be referred to as an SBP responder). Currently, an access point (access point, AP) may initiate sensing measurement on behalf of a non-access point (non-AP) station (station, STA) (where the non-AP STA indicates a STA that is not an AP). That is, in the SBP procedure, the AP is a sensing initiator.

In the IEEE 802.11bf standard, a sensing process includes sensing capability exchange, sensing measurement setup (sensing measurement setup), sensing measurement exchange (sensing measurement exchange), and sensing measurement termination. Sensing measurement setup is presented in a form of a session (session). Therefore, a sensing measurement setup process may also be referred to as a sensing measurement session (sensing measurement session) phase.

Currently, the sensing measurement setup process includes the following steps.
(1) The sensing initiator sends a sensing measurement request frame (sensing measurement request frame) to the sensing responder to initiate sensing measurement setup. Sensing measurement parameters (sensing measurement parameters), sensing types, and corresponding parameters may be set in the sensing measurement request frame.

The sensing measurement parameters may be understood as operational parameters in a sensing measurement exchange (sensing measurement exchange) process, and these parameters need to be set during sensing measurement setup. The IEEE standard defines which parameters are specifically included in the sensing measurement parameters, for example, a timer, a bandwidth for transmitting a null data packet (null data packet, NDP), and a quantity of transmitted streams in the sensing measurement exchange process.

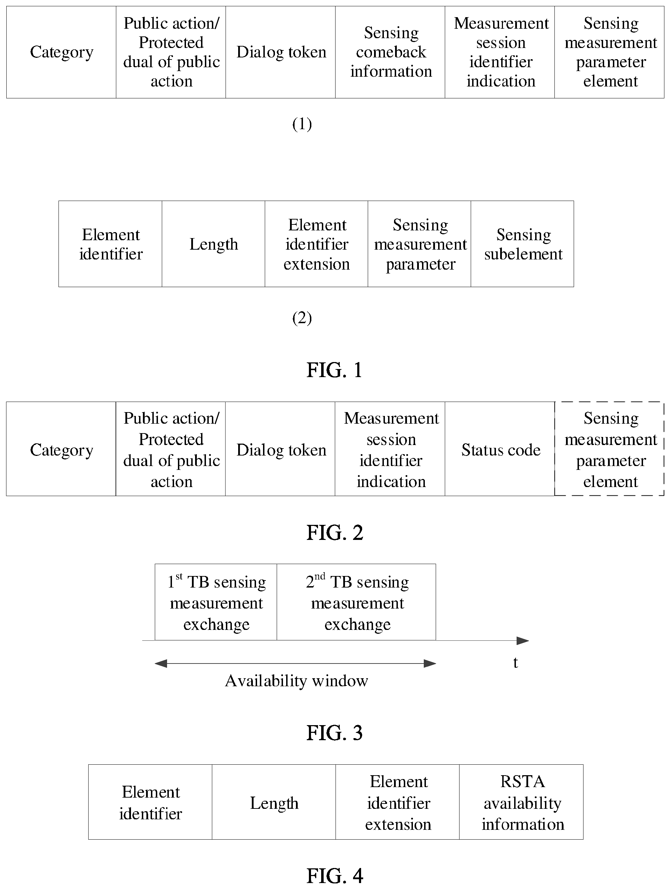

Currently, a public field structure that is of the sensing measurement request frame and that is shown in (1) in FIG. 1 includes a category (category) field, a public action/protected dual of public action (public action/protected dual of public action) field, a dialog token (dialog token) field, a sensing comeback information (sensing comeback information) field, a measurement session identifier indication (measurement session ID indication) field, and a sensing measurement parameter element (sensing measurement parameters element). For specific definitions of these fields and elements, refer to an existing standard. Details are not described herein again.

Fields and elements that are included in the sensing measurement parameter element and that are shown in (2) in FIG. 1 include an element identifier (element ID) field, a length (length) field, an element identifier extension (element ID extension) field, a sensing measurement parameter (sensing measurement parameters) field, and a sensing subelement (sensing subelements). For specific definitions of these fields and elements, refer to an existing standard. Details are not described herein again.

Currently, the sensing measurement parameter may be included in the sensing measurement parameter field and the sensing subelement. For details, refer to a standard. Details are not described herein again.

The sensing subelement is classified into a trigger-based (trigger-based, TB) sensing specific subelement (TB sensing specific subelement), a non-trigger-based (non-trigger-based, non-TB) sensing specific subelement (non-TB sensing specific subelement), and an SBP specific subelement (SBP specific subelement). The sensing subelement carried in the sensing measurement parameter element is related to a sensing measurement exchange type, and details are described below.

(2) After receiving the sensing measurement request frame, the sensing responder sends a sensing measurement response frame (sensing measurement response frame) to the sensing initiator. An action field structure that is of the sensing measurement response frame and that is shown in FIG. 2 includes the following fields: a category (category), a public action/protected dual of public action (public action/protected dual of public action), a dialog token (dialog token), a measurement session identifier indication (measurement session ID indication), and a status code (status code). In a possible implementation, the following element may be further included: a sensing measurement parameter element (sensing measurement parameter element).

Based on different cases of sensing measurement setup, the sensing measurement response frame is also correspondingly different.

If the sensing responder accepts the sensing measurement parameter element requested by the sensing measurement request frame, the status code in the sensing measurement setup response frame is set to success (SUCCESS). In this case, sensing measurement setup is completed.

If the sensing responder rejects the sensing measurement parameter element requested in the sensing measurement request frame, but provides a sensing measurement setup parameter preferred by the sensing responder in the sensing measurement response frame, the status code is set to rejected and recommended to change (REJECTED_WITH_SUGGESTED_CHANGES). In this case, sensing measurement setup fails. In a possible implementation, after receiving the sensing measurement response frame, the sensing initiator may initiate sensing measurement setup again based on the sensing measurement setup parameter provided by the sensing responder.

If the sensing responder rejects the sensing measurement parameter element requested in the sensing measurement request frame, and does not provide the sensing measurement setup parameter preferred by the sensing responder, the status code is set to request rejected (REQUEST_DECLINED). In this case, sensing measurement setup fails. In a possible implementation, after receiving the sensing measurement response frame, the sensing initiator may initiate sensing measurement setup again.

After sensing measurement setup is completed, the sensing initiator initiates one or more sensing measurement exchanges. Sensing measurement exchange may be classified into two types: trigger-based sensing measurement exchange (TB sensing measurement exchange) and non-trigger-based sensing measurement exchange (non-TB sensing measurement exchange). TB sensing measurement exchange is initiated by the AP as a sensing initiator, and non-TB sensing measurement exchange is initiated by the non-AP STA as a sensing initiator. In the sensing procedure, based on a type of sensing measurement exchange, the sensing measurement parameter element may carry a corresponding sensing subelement. In the SBP procedure, when carrying the TB sensing specific subelement, the sensing measurement parameter element also carries the SBP specific subelement to notify the sensing responder that the sensing measurement exchange is related to the SBP.

The sensing measurement exchange may also be referred to as a sensing measurement instance (sensing measurement instance). In embodiments of this application, the sensing measurement instance and the sensing measurement exchange are a same concept that can be replaced with each other.

2. Sensing availability window (sensing Availability window) technology:

In the IEEE 802.11bf standard, the sensing availability window technology is used. A sensing availability window is a periodical time window allocated by the AP to the non-AP STA, and is used by the AP and the non-AP STA to perform TB sensing measurement exchange. That is, TB sensing measurement exchange needs to be performed in the sensing availability window. For example, as shown in FIG. 3, a sensing availability window is a period of time, and includes two TB sensing measurement exchanges.

For allocation of the sensing availability window, the allocation process is completed in a sensing measurement setup process. In the current IEEE 802.11bf standard, an availability time window (availability window) field is carried in the TB sensing specific subelement, and the field carries a responding station (responding station, RSTA) availability time window element (availability window element), to allocate a sensing availability window to the non-AP STA. Currently, a frame structure that is of the RSTA availability window element and that is shown in FIG. 4 includes an element identifier (element ID) field, a length (length) field, an element identifier extension (element ID extension) field, and an RSTA availability information (RSTA availability information) field. The RSTA availability information field includes information such as duration and a periodicity of the sensing availability window.

### 3. Multi-link scenario:

In a current IEEE 802.1be standard related to wireless fidelity (wireless fidelity, Wi-Fi) 7, a multi-link (multi-link, ML) feature is introduced. If a communication device supports multi-link communication and has a capability of simultaneously setting up a plurality of links, for example, simultaneously performing communication on different frequency bands, or simultaneously performing communication on different channels of a same frequency band, the communication device may be referred to as a multi-link device (multi-link device, MLD).

The MLD may include a plurality of logically affiliated (affiliated) stations (which are referred to as logical stations for short below). Each logical station works on one link (link), but a plurality of logical stations are allowed to work on a same link. If a station in an MLD is an AP, the station may be further referred to as an AP MLD; or if a station in an MLD is a non-AP STA, the station may be further referred to as a non-AP STA MLD. The non-AP MLD and the AP MLD may communicate with each other after multi-link setup.

It should be noted that, unless otherwise specified in this specification, the non-AP STA MLD may also be referred to as a STA MLD or a non-AP MLD for short.

When data is transmitted between the AP MLD and the non-AP MLD, a link identifier may be used to identify a link or a station on a link. Before communication, the AP MLD and the non-AP MLD may negotiate about or communicate a correspondence between a link identifier and a link or a station on a link. Therefore, during data transmission, the link identifier is carried without a need to transmit a large amount of signaling information to indicate the link or the station on the link. This reduces signaling overheads and improves transmission efficiency. For example, the link identifier may be a link ID.

Each logical station included in the MLD has a respective media access control (media access control, MAC) address (address). The MLD itself has a MAC address.

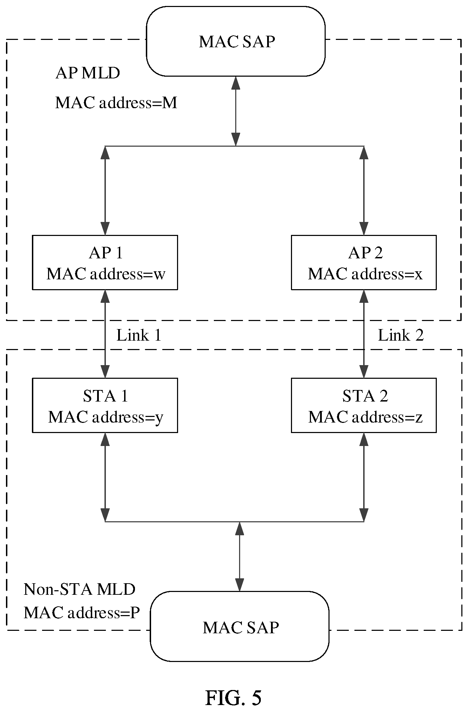

For example, FIG. 5 is an example diagram of an MLD system according to the IEEE 802.11be standard. As shown in FIG. 5, the AP MLD includes two logical stations: an AP 1 and an AP 2. The non-STA MLD has two logical stations: a STA 1 and a STA 2. The AP 1 and the STA 1 may perform data transmission with each other on a link (link) 1, and the AP 2 and the STA 2 may perform data transmission with each other on a link 2. A MAC address of the AP 1 is denoted as w, a MAC address of the AP 2 is denoted as x, a MAC address of the STA 1 is denoted as y, and a MAC address of the STA 2 is denoted as z. A MAC address of the AP MLD is denoted as M, and a MAC address of the non-STA MLD is denoted as P. The AP MLD and the non-STA MLD have respective MAC-layer service access points (service access points, SAPs) (namely, MAC SAPs in FIG. 5), and the MAC SAP is an information transmission interface between a MAC layer and an upper layer.

Currently, the sensing technology defined in the 802.11bf standard mainly focuses on a single-link scenario, without considering a multi-link scenario. In view of this, this application provides a communication method and apparatus, a storage medium, and a chip system, so that a sensing measurement session may be set up in a multi-link scenario.

In the descriptions of this application, unless otherwise specified, "/" indicates that associated objects are in an "or" relationship. For example, A/B may represent A or B. In this application, "and/or" describes only an association relationship between the associated objects and represents that three relationships may exist. For example, A and/or B may indicate: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In embodiments of this application, "indication" may include a direct indication and an indirect indication, or may include an explicit indication and an implicit indication. Information indicated by a piece of information (for example, the first indication information below) is referred to as to-be-indicated information. In a specific implementation process, the to-be-indicated information is indicated in a plurality of manners. By way of example and not limitation, the to-be-indicated information may be directly indicated. For example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of each piece of information that is pre-agreed on (for example, specified in a protocol), to reduce indication overheads to some extent. In addition, a common part of each piece of information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to the conventional technology. Details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

It should be understood that the to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in embodiments of this application. The sending periodicities and/or the sending occasions of these pieces of sub-information may be predefined, for example, predefined according to a protocol, or may be configured by a transmit end device by sending configuration information to a receive end device.

In embodiments of this application, "predefined, "predefinition, "preconfigured", or "preconfiguration" may be implemented by pre-storing corresponding code or a corresponding table in a device, or may be implemented in another manner for indicating related information, for example, may be burnt into the device before delivery of the device. A specific implementation is not limited in embodiments of this application. "Storage" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in embodiments of this application.

The "protocol" in embodiments of this application may be a protocol family in the communication field, a standard protocol with a frame structure similar to the protocol family, or a related protocol applied to a future communication system. This is not specifically limited in embodiments of this application.

In embodiments of this application, descriptions such as "when...", "in a case of...", and "if" all mean that a device performs corresponding processing in an objective case, and are not intended to limit time, and the device is not required to perform a determining action during implementation, and do not mean any other limitation.

The method provided in this application may be applied to a WLAN system, for example, wireless fidelity (wireless fidelity, Wi-Fi). For example, the method provided in this application may be applicable to an IEEE 802.11 series protocol. The 802.11 protocol may be a protocol that supports 802.11be or is compatible with 802.11be, for example, an 802.11ax next-generation Wi-Fi protocol such as 802.11be, Wi-Fi 7, or extremely high throughput (extremely high throughput, EHT), for another example, a next generation of 802.1be and Wi-Fi 8, and for another example, 802.11bf and its next-generation standard. Details are not enumerated herein. The method provided in this application may be further applied to a future WLAN system. The method provided in this application may be further applied to an ultra wide band (ultra wide band, UWB)-based wireless personal local area network system and a sensing system.

It should be noted that, although this application is mainly described by using an example in which an IEEE 802.11 network is deployed, a person skilled in the art may easily understand that various aspects in this application may be extended to other networks that use various standards or protocols, for example, a high performance radio local area network (high performance radio local area network, HIPERLAN) (a radio standard that is similar to the IEEE 802.11 standard and that is mainly used in Europe), a wide area network (wide area network, WAN), a personal area network (personal area network, PAN), or another network that is known or developed in the future.

It should be noted that a network architecture and a service scenario that are described in embodiments of this application are intended to describe the technical solutions in embodiments of this application more clearly, but constitute no limitation on the technical solutions provided in embodiments of this application. A person of ordinary skill in the art may know that, with evolution of the network architecture and emergence of new service scenarios, the technical solutions provided in embodiments of this application are also applicable to similar technical problems.

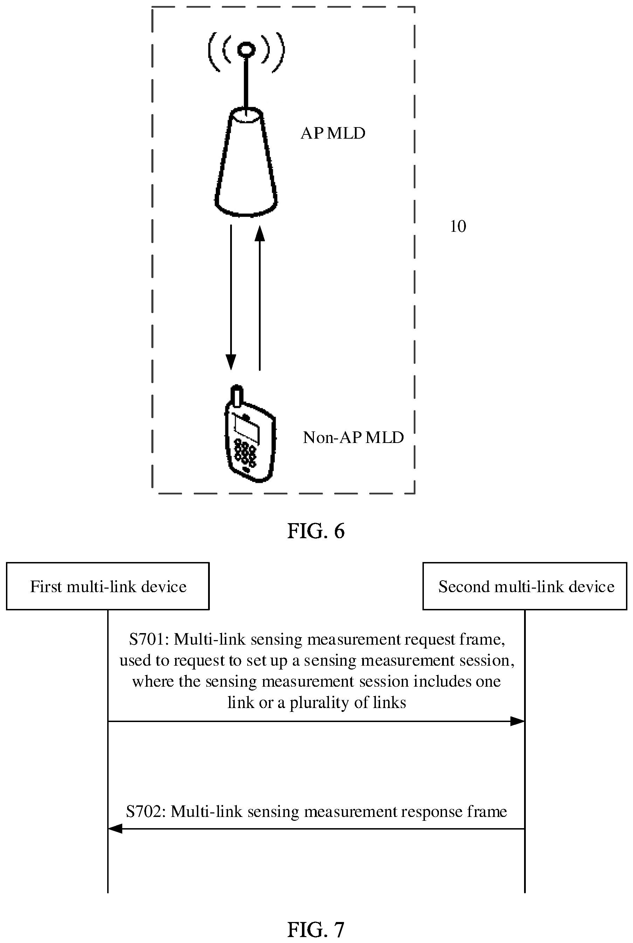

FIG. 6 is a diagram of a possible non-limiting communication system to which an embodiment of this application is applicable. As shown in FIG. 6, the communication system 10 includes at least one AP MLD and at least one non-AP MLD. The AP MLD and the non-AP MLD may communicate with each other.

It should be noted that quantities of AP MLDs and non-AP MLDs shown in FIG. 6 are merely examples. In the wireless communication system, there may be more or fewer AP MLDs or non-AP MLDs. This is not limited in this application.

Optionally, the communication system 10 may further include a conventional station that supports transmission only on a single link.

In FIG. 6, an example in which the AP MLD is a router and the non-AP MLD is a mobile phone is used, and this does not indicate a limitation on types of the AP MLD and the non-AP MLD in this application.

In this specification, two multi-link devices that exchange with each other to perform the communication method provided in embodiments of this application are referred to as a first multi-link device and a second multi-link device. The first multi-link device may be the AP MLD. The second multi-link device may be the non-AP MLD. Alternatively, the second multi-link device may be the AP MLD, and the first multi-link device may be the non-AP MLD.

For example, the first multi-link device exchanges with the second multi-link device. In the communication method provided in embodiments of this application, the first multi-link device sends a multi-link sensing measurement request frame to the second multi-link device. The multi-link sensing measurement request frame is used to request to set up a sensing measurement session, where the sensing measurement session includes a plurality of links. After receiving the multi-link sensing measurement request frame, the second multi-link device sends a multi-link sensing measurement response frame to the first multi-link device. Correspondingly, the first multi-link device receives the multi-link sensing measurement response frame. Specific implementations and technical effects of the solution are described in detail in subsequent method embodiments. Details are not described herein again.

In embodiments of this application, a frequency band on which a multi-link device works may include one or more of the following frequency bands: sub-1 GHz, 2.4 GHz, 5 GHz, 6 GHz, and a high frequency 60 GHz.

For example, the multi-link device in embodiments of this application may be a single-antenna device, or may be a multi-antenna device. For example, the multi-link device may be a device with more than two antennas. A quantity of antennas included in the multi-link device is not limited in embodiments of this application.

For example, the multi-link device is an apparatus with a wireless communication function, and the apparatus may be a whole device, or may be a chip, a processing system, or the like installed in a whole device. The device in which the chip or the processing system is installed may implement methods and functions in embodiments of this application under control of the chip or the processing system. For example, the first multi-link device or the second multi-link device in embodiments of this application has a wireless transceiver function, may support an 802.11 series protocol, and may communicate with another multi-link device or another single-link device.

For example, the non-AP MLD is any user communication device that allows a user to communicate with an AP to further communicate with a WLAN, and may support the 802.11 series protocol. For example, the non-AP MLD may be user equipment that can connect to a network, for example, a tablet computer, a desktop computer, a laptop computer, a notebook computer, an ultra-mobile personal computer (ultra-mobile personal computer, UMPC), a handheld computer, a netbook, a personal digital assistant (personal digital assistant, PDA), or a mobile phone, an internet of things node in an internet of things, a vehicle-mounted communication apparatus in an internet of vehicles, or the like. The non-AP MLD may alternatively be a chip and a processing system in the foregoing terminals.

In a possible implementation, the multi-link device may support high-rate and low-latency transmission. With continuous evolution of application scenarios of a wireless local area network, the multi-link device may be further applied to more scenarios. For example, the multi-link device may be a sensor node (for example, a smart water meter, a smart electricity meter, or a smart air detection node) in a smart city, a smart device (for example, a smart camera, a projector, a display, a television, a stereo, a refrigerator, or a washing machine) in a smart home, a node in an internet of things, an entertainment terminal (for example, a wearable device such as an AR and a VR), a smart device (for example, a printer or a projector) in a smart office, an internet of vehicles device in an internet of vehicles, or some infrastructures (for example, a vending machine, a self-service navigation console in a supermarket, a self-checkout device, and a self-service ordering machine) in a daily life scenario. Specific forms of the non-AP MLD and the AP MLD are not limited in embodiments of this application, and are merely examples for description herein.

With reference to FIG. 1 to FIG. 6, the following describes in detail the communication method provided in embodiments of this application by using an example in which the first multi-link device exchanges with the second multi-link device.

In embodiments of this application, the term "communication" may also be described as "data transmission", "information transmission", or "transmission". The term "transmission" may generally refer to sending and receiving.

It should be noted that names of messages between devices, parameters in the messages, names of fields, or the like in the following embodiments of this application are merely examples, and there may be other names in a specific implementation. This is not specifically limited in embodiments of this application.

It should be noted that a length of a field in the following embodiments of this application is merely an example, and there may be another name in a specific implementation. This is not specifically limited in embodiments of this application.

It should be noted that, in the following embodiments of this application, if a length of a field is variable (variable), it indicates that the length of the field is uncertain. In an actual design process, a specific length of the field may be indicated based on other indication information, or a receive end and a transmit end may negotiate the length of the field in advance, or the length of the field is predefined; or when receiving a message carrying the field, the receive end can determine the length of the field based on other auxiliary information, and parse the message. A manner of determining a specific length of a field whose length is variable is not limited in this application.

In addition, it may be understood that, if the field is an optional field, when a message does not include the field, a length of the field is 0.

It should be noted that, in the following embodiments of this application, if a value of the field indicates specific information, the value of the field is not specifically limited. For example, if a similar expression such as "when a field is set to "00", it represents..." appears in the following, "00" is merely an example value, and may be correspondingly replaced with another value such as "01", "10", or "11" in different implementations.

FIG. 7 shows a communication method according to an embodiment of this application. In FIG. 7, an example in which a first multi-link device and a second multi-link device are used as execution bodies of exchange is used to illustrate the method. However, the execution bodies of exchange are not limited in this application. For example, the first multi-link device in FIG. 7 may also be a module, for example, a chip, a chip system, or a processor, used in the first multi-link device, or may be a logical node, a logical module, or software that can implement all or some functions of the network device node. The second multi-link device in FIG. 7 may also be a module, for example, a chip, a chip system, or a processor, used in the second multi-link device, or may be a logical node, a logical module, or software that can implement all or some functions of the second multi-link device. The communication method includes the following steps.

S701: The first multi-link device sends a multi-link sensing measurement request frame to the second multi-link device, where the multi-link sensing measurement request frame is used to request to set up a sensing measurement session, and the sensing measurement session includes one link or a plurality of links (that is, the sensing measurement session includes at least one link); and correspondingly, the second multi-link device receives the multi-link sensing measurement request frame.

S702: The second multi-link device sends a multi-link sensing measurement response frame to the first multi-link device; and correspondingly, the first multi-link device receives the multi-link sensing measurement response frame.

The communication method provided in this embodiment of this application may be applied to a sensing procedure scenario of WLAN sensing. In this scenario, the first multi-link device sends the multi-link sensing measurement request frame to the second multi-link device to request to set up the sensing measurement session. It may be understood that, in a sensing measurement process, a sensing session phase is equivalent to a sensing measurement setup process. Therefore, that the first multi-link device sends the multi-link sensing measurement request frame to the second multi-link device may also be understood as that the first multi-link device initiates sensing measurement setup. Sensing measurement is a type of sensing behavior. Therefore, the first multi-link device is a device that initiates the sensing behavior, namely, a sensing initiator. Correspondingly, the second multi-link device is a device that responds to the sensing behavior initiated by the sensing initiator and participates in the sensing behavior, namely, a sensing responder.

In the sensing procedure scenario, if the first multi-link device is an AP MLD and the second multi-link device is a non-AP MLD, sensing measurement initiated by the first multi-link device based on the multi-link sensing measurement request frame may correspond to a TB sensing type. If the second multi-link device is an AP MLD and the first multi-link device is a non-AP MLD, sensing measurement initiated by the first multi-link device based on the multi-link sensing measurement request frame may correspond to a non-TB sensing type.

In a possible implementation, the communication method provided in this embodiment of this application may be applied to an SBP procedure scenario of WLAN sensing. In this scenario, an SBP initiator may be a non-AP MLD. The non-AP MLD requests the first multi-link device (where the first multi-link device may be an AP MLD) to initiate sensing measurement on behalf of the non-AP MLD, that is, to send the multi-link sensing measurement request frame to the sensing responder (namely, the second multi-link device, where the second multi-link device may be the non-AP MLD) on behalf of the non-AP MLD. Further, after the sensing measurement session requested by sending the multi-link sensing measurement request frame is successfully set up, if the first multi-link device receives a measurement report from the second multi-link device, the first multi-link device may send the measurement report to the non-AP MLD on whose behalf the sensing measurement is initiated. In the SBP procedure scenario, sensing measurement setup initiated by the first multi-link device based on the multi-link sensing measurement request frame and subsequent sensing measurement exchange may be used to meet a requirement of the SBP initiator.

In a possible implementation, in this embodiment of this application, the first multi-link device may send a multi-link sensing measurement request frame to one second multi-link device, or may respectively send multi-link sensing measurement request frames to a plurality of second multi-link devices. If the first multi-link device respectively sends the multi-link sensing measurement request frames to the plurality of second multi-link devices, each multi-link sensing measurement request frame may be used to request to set up a different sensing measurement session, or may be used to request to set up a same sensing measurement session.

In a possible implementation, the multi-link sensing measurement request frame may include identification information used to identify the sensing measurement session, for example, may include a sensing measurement setup identifier (measurement session identifier, MSID). If the first multi-link device respectively sends the multi-link sensing measurement request frames to the plurality of second multi-link devices to request to set up a different sensing measurement session, MSIDs included in each multi-link sensing measurement request frame may be different. If the first multi-link device respectively sends the multi-link sensing measurement request frames to the plurality of second multi-link devices to request to set up a same sensing measurement session, MSIDs included in each multi-link sensing measurement request frame may be the same.

It should be noted that the multi-link sensing measurement request frame (Multi-link sensing measurement request frame) is an example name of a frame used to request to set up a sensing measurement session in a multi-link scenario in this embodiment of this application. The frame may also have another name, for example, a sensing measurement request frame. This is not specifically limited in this embodiment of this application.

The following describes S701 and S702 in detail.

In this embodiment of this application, unless otherwise specified, the link included in the sensing measurement session may also be understood as a link for performing sensing measurement exchange. In S701, that the sensing measurement session includes the link or the plurality of links means that one link or a plurality of links perform sensing measurement exchange after sensing measurement session setup is completed.

In a possible implementation, the link included in the sensing measurement session may be a link connected between the first multi-link device and the second multi-link device, or may be a link connected between the second multi-link device and another sensing responder.

In this embodiment of this application, the multi-link sensing measurement request frame sent by the first multi-link device may indicate one link or a plurality of links requested by the first multi-link device. The link or the plurality of links requested by the first multi-link device may be understood as one link or a plurality of links that are expected by the first multi-link device to participate in sensing measurement exchange. After receiving the multi-link sensing measurement request frame, the second multi-link device may determine whether to accept (or support) the link requested by the first multi-link device. The second multi-link device may accept each link in the links requested by the first multi-link device, or may accept a part of links in the links requested by the first multi-link device, or may not accept each link requested by the first multi-link device.

Further, the second multi-link device may send the multi-link sensing measurement response frame to the first multi-link device, to indicate a status of accepting, by the second multi-link device, the link or the plurality of links requested by the first multi-link device. The first multi-link device may determine, based on the multi-link sensing measurement response frame, whether the sensing measurement session can be successfully set up. A specific implementation of this solution is described in S702, and is not described herein.

In this embodiment of this application, the sensing measurement session may be set up when the second multi-link device accepts each link requested by the first multi-link device. In this case, each link included in the sensing setup session is each link requested by the first multi-link device. Alternatively, the sensing measurement session may be set up when the second multi-link device accepts the part of links in the links requested by the first multi-link device. In this case, the link included in the sensing setup session is a part of links accepted by the second multi-link device among the links requested by the first multi-link device.

For example, in this embodiment of this application, the link requested by the first multi-link or the link included in the sensing measurement session may also be referred to as a sensing link (Sensing link).

The following uses an example in which the sensing measurement session includes a plurality of links to describe the technical solutions in embodiments of this application. It may be understood that, after adaptive adjustment, the solutions in the following embodiments may also be applied to a scenario in which the sensing measurement session includes one link.

In a possible implementation, in S701, the multi-link sensing measurement request frame sent by the first multi-link device may include a sensing measurement parameter configured by the first multi-link device for the requested link. The sensing measurement parameter indicates a parameter that needs to be set when the sensing measurement session is set up. If sensing measurement session setup is completed, each link included in the sensing measurement session may perform sensing measurement exchange based on a corresponding sensing measurement parameter. Therefore, setting up the sensing measurement session may also be understood as a process of setting the corresponding sensing measurement parameter for the link included in the sensing measurement session.

It should be noted that, in this embodiment of this application, the sensing measurement parameter is an example name of the parameter that needs to be set when the sensing measurement session is set up, and may also be referred to as a multi-link sensing measurement parameter or the like. This is not specifically limited in this embodiment of this application.

In a possible implementation, when the multi-link sensing measurement request frame includes the sensing measurement parameter configured by the first multi-link device for the requested link, that the second multi-link device accepts the link requested by the first multi-link device may also be understood as that the second multi-link device accepts the sensing measurement parameter corresponding to the link, or that the second multi-link device accepts the link to participate in sensing measurement exchange based on the corresponding sensing measurement parameter.

In a possible implementation, in S701, the sensing measurement parameter may include a public parameter and/or a specific parameter. The public parameter is a parameter shared by the plurality of links, and the specific parameter is a dedicated parameter of a part of links in the plurality of links. Alternatively, the public parameter is at a multi-link device level (MLD-level), and may be distinguished by multi-link device during configuration. A public parameter configured by a multi-link device is applicable to each link of the multi-link device. The specific parameter is at a link level (link-level). A specific parameter of each link is independent. During configuration, the specific parameter needs to be distinguished by link. Specific parameters of different links may be the same or different.

If sensing measurement session setup is completed, each link included in the sensing measurement session may perform sensing measurement exchange based on the public parameter and the corresponding specific parameter.

The following describes several types of information that may be included in the public parameter and/or the specific parameter provided in this embodiment of this application.

In a possible implementation, the public parameter may include recommended report link information. The recommended report link information indicates a link for reporting sensing data. For example, the recommended report link information may be a field, for example, may be a recommended report link (Recommended report link) field.

The sensing data indicates data measured when sensing measurement exchange is performed on the plurality of links. The sensing data needs to be reported to the first multi-link device through a report. In other words, the recommended report link information indicates which link or links in the plurality of links report the sensing data to the first multi-link device. Other links in the plurality of links may send the measured data to a recommended report link, and the recommended report link sends the data.

A specific implementation of indicating the link by the recommended report link information is not limited in this embodiment of this application. In a possible implementation, the recommended report link information may indicate identification information of a link, for example, a link ID.

In a possible implementation, the recommended report link information may be a bitmap (bitmap). A length of the bitmap may be fixed, for example, may be 16 bits, or a length of the bitmap may be variable (variable). For example, when an i^{th} bit in the bitmap is set to 1, a corresponding link ID is i. That is, it indicates that a link whose link ID is i reports a sensing data report. For another example, when an i^{th} bit in the bitmap is set to 1, a bit position (bit position) is i-1, and a corresponding link ID is i-1. That is, it indicates that a link whose link ID is i-1 reports a sensing data report.

The solution in which the recommended report link information indicates the link for reporting the sensing data may improve sensing measurement performance in some scenarios. For example, in a high-speed moving scenario in which a high measurement frequency is required, a measurement frequency may be affected when a report is sent on a current link for measuring sensing data, and the sensing data measured on the link may be sent through another link. In addition, air interface resources can be saved.

In a possible implementation, the public parameter may include session setup condition information. The session setup condition information indicates a condition for successfully setting up the sensing measurement session. For example, the session setup condition information may be a field, for example, may be a session setup condition (session setup condition) field.

In a possible implementation, the condition for setting up the sensing measurement session may be that a proportion and/or a quantity of links that meet a corresponding sensing measurement parameter (for example, a public parameter and a specific parameter corresponding to the link) meet a specific requirement. In this implementation, the session setup condition information may indicate a requirement on the proportion and/or the quantity of links. When the quantity and/or the proportion of links that meet the corresponding sensing measurement parameter are/is not less than a quantity and/or a proportion required by the session setup condition information, the sensing measurement session may be set up; otherwise, the sensing measurement session cannot be set up.

In a possible implementation, the requirement indicated by the session setup condition information on the proportion and/or the quantity of links may be preset, defined in a protocol, or pre-agreed on by the first multi-link device and the second multi-link device.

For example, it is assumed that the session setup condition information is a 2-bit field. The first multi-link device and the second multi-link device may pre-agree on different meanings represented by different values of the field. For example, when the field is set to "00", it indicates that all links requested by the first multi-link device are necessary. In this case, the second multi-link device needs to accept all sensing measurement parameters corresponding to all the links requested by the first multi-link device, so that the sensing measurement session can be successfully set up. When the field is set to "01", it indicates that not all links requested by the first multi-link device are necessary. If the second multi-link device may accept sensing measurement parameters corresponding to greater than or equal to 50% links in all the links requested by the first multi-link device, the sensing measurement session can be successfully set up. When the field is set to "10", it indicates that not all links requested by the first multi-link device are necessary. If the second multi-link device may accept sensing measurement parameters corresponding to more than two links in all the links requested by the first multi-link device, the sensing measurement session can be successfully set up. When the field is set to "11", it indicates that not all links requested by the first multi-link device are necessary. If the second multi-link device may accept sensing measurement parameters corresponding to more than one link in all the links requested by the first multi-link device, the sensing measurement session can be successfully set up.

In a possible implementation, the session setup condition information may indicate a specific quantity of links.

For example, the session setup condition information may be a 4-bit field, and a value of the field represents a quantity of required links. For example, the multi-link sensing measurement request frame sent by the first multi-link device includes sensing measurement parameters configured by the first multi-link device for four requested links, where a value of the session setup condition information is 3. In this case, if the second multi-link device may accept sensing measurement parameters corresponding to more than or equal to three links in the four links requested by the first multi-link device, the sensing measurement session can be successfully set up.

In a possible implementation, the public parameter may further include mandatory link information. The mandatory link information indicates a mandatory link for successfully setting up the sensing session. In other words, the mandatory link information needs to meet a requirement of a link participating in sensing measurement exchange as indicated by the session setup condition information. If the link participating in sensing measurement exchange as indicated by the session setup condition information meets a requirement of a corresponding sensing measurement parameter, the sensing measurement session can be successfully set up only when information indicated by the mandatory link meets the requirement of the corresponding sensing measurement parameter. If the session setup condition information indicates a requirement on a quantity of links participating in sensing measurement exchange, the sensing measurement session can be set up only when the mandatory link is one of the links participating in sensing measurement exchange.

In a possible implementation, the mandatory link information may indicate identification information of the mandatory link for successfully setting up the sensing session, for example, a link ID. Alternatively, the mandatory link information may indicate an address of the mandatory link for successfully setting up the sensing session, for example, a MAC address (MAC address) of the link.

For example, the mandatory link information may be a bitmap, for example, may be referred to as a mandatory link list (mandatory link list) field or a mandatory link bitmap (mandatory link bitmap) field. For example, when an i^{th} bit in the bitmap is set to 1, it indicates that a link whose link ID is i is the mandatory link. For another example, when an i^{th} bit in the bitmap is set to 1, it may indicate that a link whose link ID is i-1 is the mandatory link.

For example, the mandatory link information may indicate a link ID of one mandatory link by using 4 bits. If n link IDs are indicated, the mandatory link information occupies 4n bits.

For example, the mandatory link information may indicate a MAC address of one mandatory link by using 6 octets (octets). If n MAC addresses are indicated, the mandatory link information occupies 6n octets.

In a possible implementation, the public parameter may further include optional link information. The optional link information may indicate a link on which the first multi-link device expects to perform sensing measurement. If the second multi-link device can accept the link indicated by the optional link information, the link indicated by the optional link information may perform sensing measurement. If the second multi-link device cannot accept the link indicated by the optional link information, it will not cause sensing measurement session setup to fail.

For how the optional link information indicates an optional link, refer to the foregoing description of the mandatory link information. For example, the optional link information may be a bitmap. Details are not described herein again.

In a possible implementation, if the communication method provided in this embodiment of this application is applied to an SBP scenario, the non-AP MLD may send a multi-link SBP request frame to the first multi-link device, to request the first multi-link device to initiate sensing measurement on behalf of the non-AP MLD. The multi-link SBP request frame may carry link indication information corresponding to each second multi-link device (where there may be one or more second multi-link devices), and information indicating a corresponding second multi-link device (for example, address or identification information of the second multi-link device). After receiving the multi-link SBP request frame, the first multi-link device may send, to each second multi-link device, the multi-link sensing measurement request frame that includes the link indication information corresponding to the second multi-link device.

The link indication information may include at least one of the mandatory link information, the optional link information, and the information indicating the requirement on the quantity of links. For the mandatory link information and the information indicating the requirement on the proportion and/or the quantity of links, refer to the foregoing description of the session setup condition information. Details are not described herein again. The optional link information may indicate a link on which the non-AP MLD expects to perform sensing measurement. If the second multi-link device can accept the link indicated by the optional link, the link indicated by the optional link may perform sensing measurement. If the second multi-link device cannot accept the link indicated by the optional link, it will not cause sensing measurement session setup to fail. It may be understood that, in the SBP scenario, the link indication information is equivalent to the session setup condition information.

In a possible implementation, the specific parameter may include identification information of the part of links. When the multi-link sensing measurement request frame includes information about the part of links, the identification information of the part of links may indicate information about which links are included in the multi-link sensing measurement request frame. For example, the identification information of the part of links may indicate an ID of each link in the part of links. For example, the identification information of the part of links may be a link ID (Link ID) field, and a value of the link ID field may be 4 bits.

In a possible implementation, the public parameter and/or the specific parameter may be included in a multi-link sensing measurement parameter field (Multi-link Sensing measurement parameters field). For example, the multi-link sensing measurement parameter field may include at least one of the recommended report link information, the session setup condition information, the mandatory link information, and the identification information of the part of links in the foregoing embodiments.

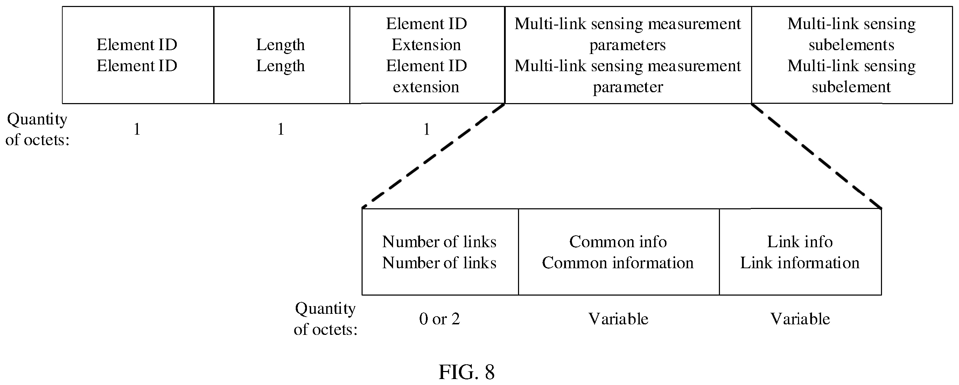

In a possible implementation, the multi-link sensing measurement parameter field may be included in a multi-link sensing measurement parameter element (which may also be referred to as a multi-link sensing parameter element). For example, FIG. 8 is a diagram of a structure of a multi-link sensing measurement parameter element. As shown in FIG. 8, the multi-link sensing measurement parameter element includes a multi-link sensing measurement parameter (namely, a multi-link sensing measurement parameter field) field and a multi-link sensing subelement. The multi-link sensing measurement parameter field includes a number of links (Number of links) field, a common information (Common Info) field, and a link information (Link Info) field.

In a possible implementation, in this embodiment of this application, based on different sensing types, the multi-link sensing subelement may be classified into a TB sensing specific subelement (TB sensing specific subelement) and a non-TB sensing specific subelement.

In a possible implementation, the common information field may include the public parameter, and the link information field may include the specific parameter corresponding to the part of links.

In a possible implementation, the multi-link sensing measurement parameter element may further include a multi-link control (Multi-Link Control) field. The field may include a type (Type) field, a reserved (Reserved) field, and a presence bitmap (Presence Bitmap) field. The Type field may indicate a type of sensing measurement, for example, TB, non-TB, or SBP. A length of the Reserved field is variable, and is used to control that a total quantity of bits occupied by the multi-link sensing measurement parameter element is a multiple of 8 bits. The Presence Bitmap field indicates whether some fields in common information exist.

For example, when it is assumed that a value of an i^{th} bit in the Presence Bitmap field is 1, whether a corresponding field is included in the common information may be indicated. In a possible implementation, a field corresponding to a bit in the Presence Bitmap field may be preset, defined in a protocol, or pre-agreed on by the first multi-link device and the second multi-link device.

In a possible implementation, a specific parameter corresponding to each link in the part of links may be carried in a field/subelement corresponding to the link. In this embodiment of this application, the field/subelement including the specific parameter corresponding to the part of links may be referred to as a per-station profile (per-STA profile) field/subelement. For example, the per-station profile field/subelement may be carried in the link information field shown in FIG. 8.

In a possible implementation, a specific parameter that corresponds to a link and that is included in the per-station profile field/subelement may be indicated based on identification information that is of the part of links and that is included in the station profile field/subelement.

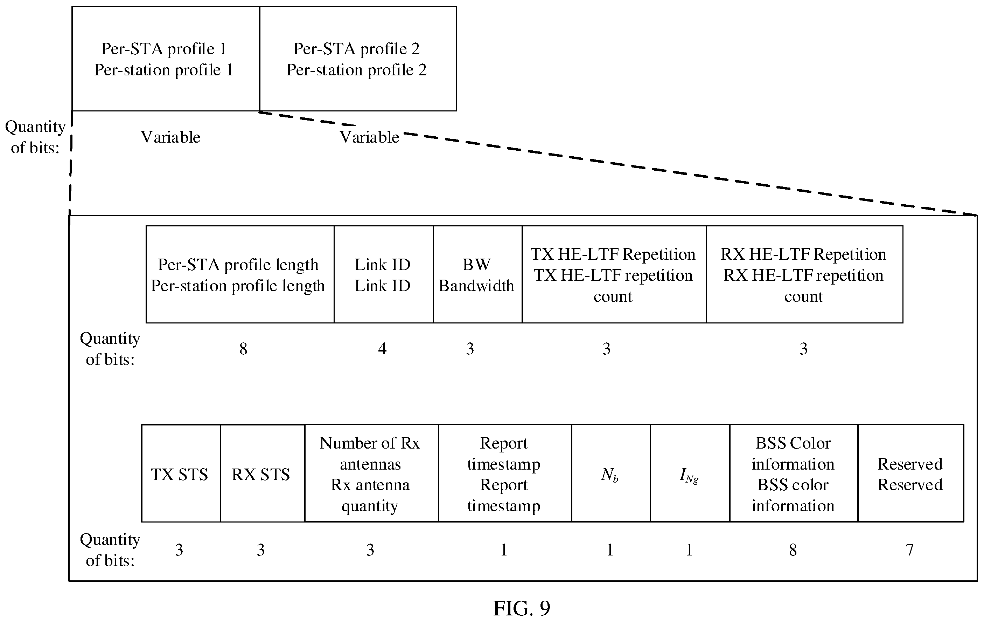

For example, fields included in the per-station profile field may be shown in FIG. 9. The link ID field is the identification information of the part of links. Another field included in the per-station profile field is a specific parameter corresponding to a link corresponding to the link ID. If a per-station profile is a subelement, the per-station profile subelement may further include a subelement ID field, indicating that a per-station profile is used as an ID of a subelement.

In a possible implementation, in this embodiment of this application, a length of the field or the element may be a fixed value, and the fixed value may be preset, defined in a protocol, or pre-agreed on by the first multi-link device and the second multi-link device, for example, may be n bits or n octets. Alternatively, the length of the field or the element may be variable (variable). In a possible implementation, if the length of the field is variable, the field may include a field indicating the length of the field.

For example, in FIG. 9, the per-station profile field includes a per-station profile length (Per-STA Profile Length) field, and the field indicates a length of the station profile (for example, a total quantity of octets/bits occupied by the common information).

In a possible implementation, for the public parameter included in the common information field, the common information field may include at least one of the recommended report link information, the session setup condition information, and the mandatory link information.

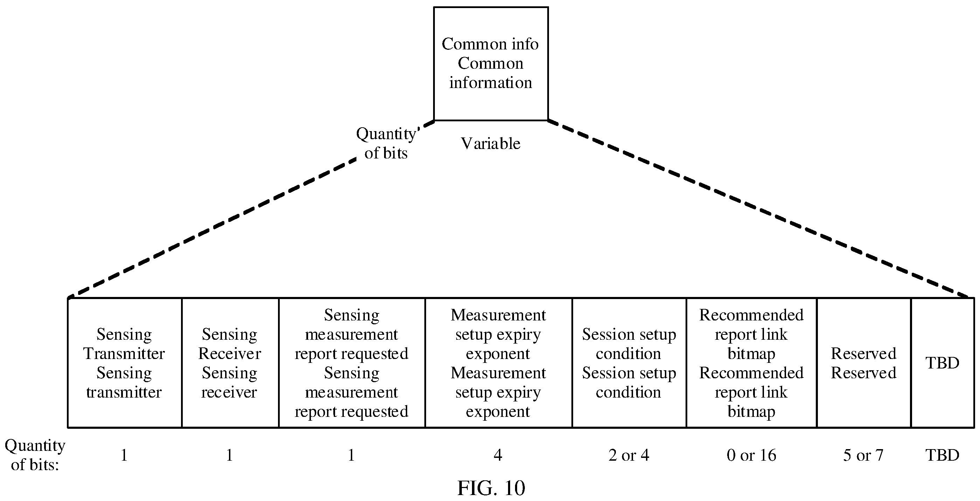

An example structure of the common information field may be shown in FIG. 10. A recommended report link bitmap (Recommended Report Link Bitmap) is the recommended report link information. A session setup condition (Session Setup Condition) field is the session setup condition information.

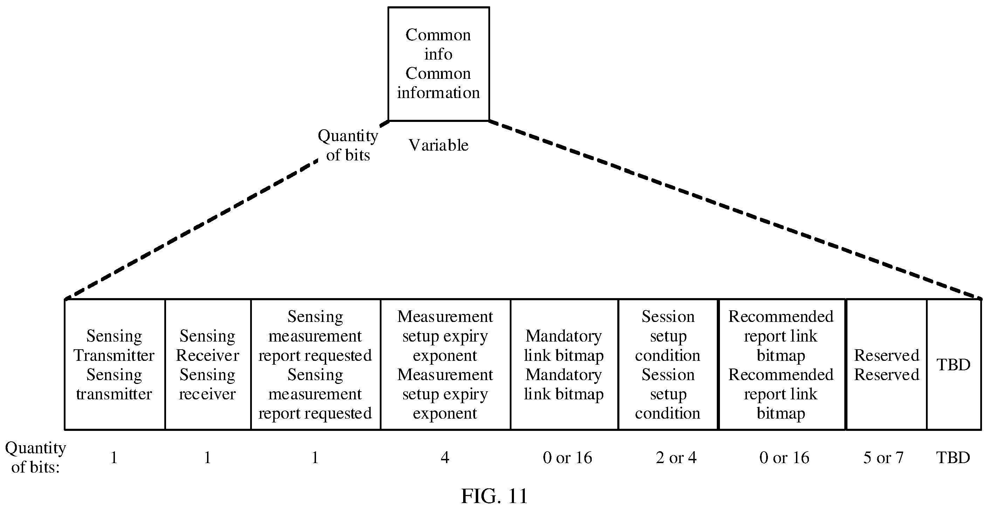

Another example structure of the common information field may be shown in FIG. 11. In comparison with the structure shown in FIG. 10, the common information field shown in FIG. 11 further includes a mandatory link bitmap (Mandatory Link Bitmap), namely, the mandatory link information.

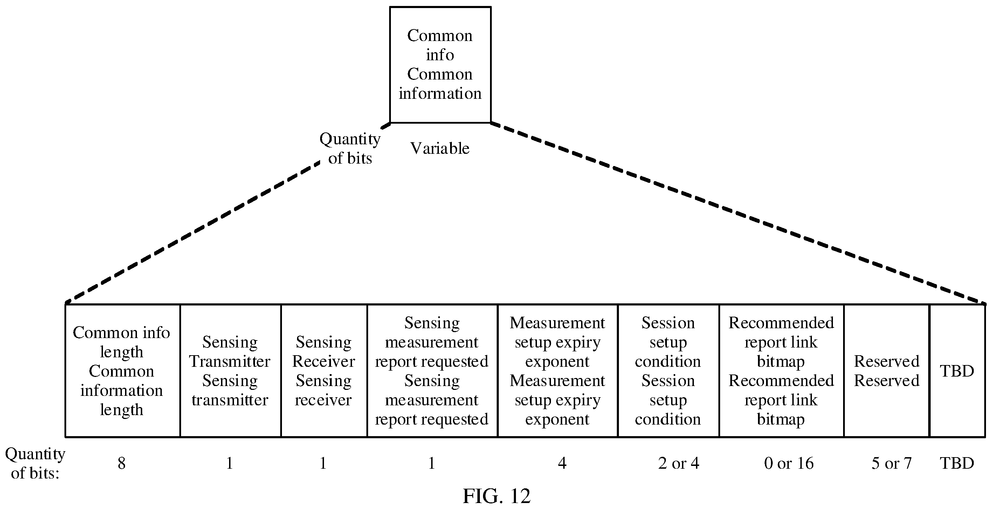

Another example structure of the common information field may be shown in FIG. 12. In comparison with the structure shown in FIG. 10, the common information field shown in FIG. 12 further includes a common information length (Common Info Length) field. The field may indicate a length of the common information (for example, a total quantity of octets/bits occupied by the common information).

TBD fields in FIG. 10, FIG. 11, and FIG. 12 may be to-be-confirmed fields.

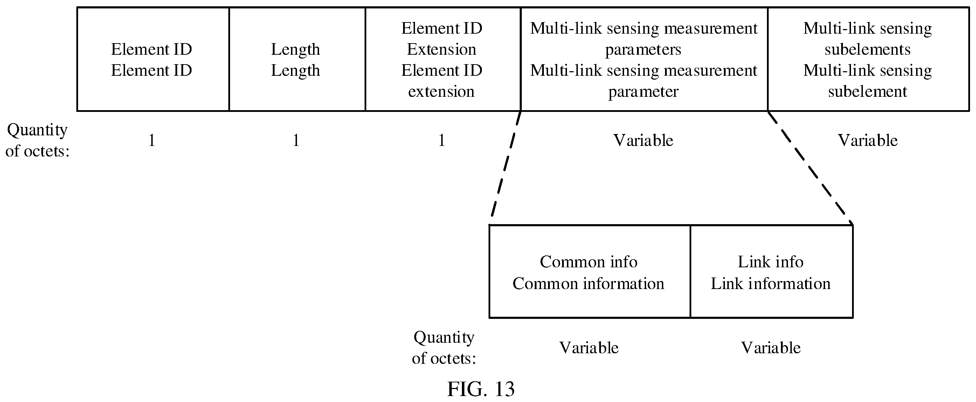

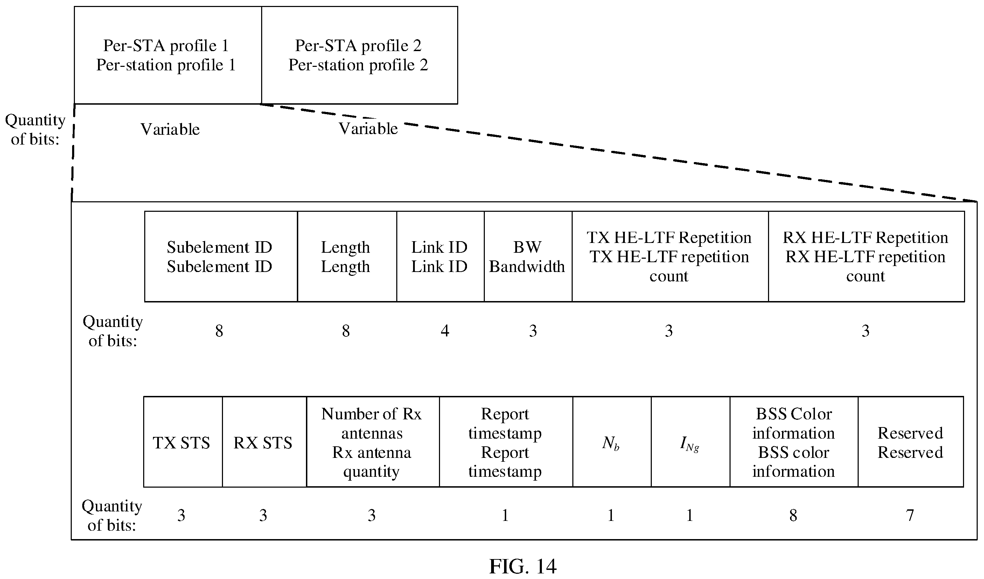

In the foregoing embodiments, FIG. 8 is a diagram of a possible structure of the multi-link sensing measurement parameter element. The following describes another possible structure of the multi-link sensing measurement parameter element. FIG. 13 is a diagram of another possible structure of the multi-link sensing measurement parameter element. As shown in FIG. 13, a multi-link sensing measurement parameter field may not include a number of links field. In this case, the per-station profile included in link information may be a subelement. FIG. 14 is a diagram of a possible structure of a per-station profile when the per-station profile is a subelement. As shown in FIG. 14, the per-station profile field includes a subelement ID field and a length (Per-STA Profile Length) field. The subelement ID field indicates an ID of the per-station profile as a subelement, and the length field indicates a length of the per-station profile, for example, a total quantity of octets/bits occupied by the per-station profile.

In a possible implementation, if the link information includes a plurality of sensing link profile subelements, subelement IDs of per-station profile subelements may be different.

In a possible implementation, the public parameter may include reference time window information. The reference time window information indicates a reference time window, and the reference time window is used to determine a sensing time window of each of the plurality of links. The sensing time window is used to perform sensing measurement exchange. In other words, each of the plurality of links needs to perform sensing measurement exchange in a corresponding sensing time window.

For example, the reference time window information may be a reference time window (reference availability window, AW) field.

In a possible implementation, the reference time window information may indicate duration, start time, and a periodicity of the reference time window.

In a possible implementation, if the public parameter includes the reference time window information, the identification information of the part of links and time window offset information may be set for each link in the part of links. The identification information of the part of links indicates an identifier of a corresponding link. The time window offset information indicates an offset of the sensing time window of the corresponding link relative to the reference time window. It may be understood that the identification information of the part of links and the time window offset information are specific parameter information.

The offset indicated by the time window offset information may be an offset of start time of the sensing time window of the corresponding link relative to the start time of the reference time window. In a possible implementation, the sensing time window of each link may reuse the duration and the periodicity of the reference time window. In other words, the sensing time window of each link is different from the reference time window only in terms of the start time.

Alternatively, the time window offset information may indicate an offset of duration and/or a periodicity of the sensing time window of the corresponding link relative to the duration and/or the periodicity of the reference time window.

The following describes several example manners in which the time window offset information indicates the sensing time window of the corresponding link.

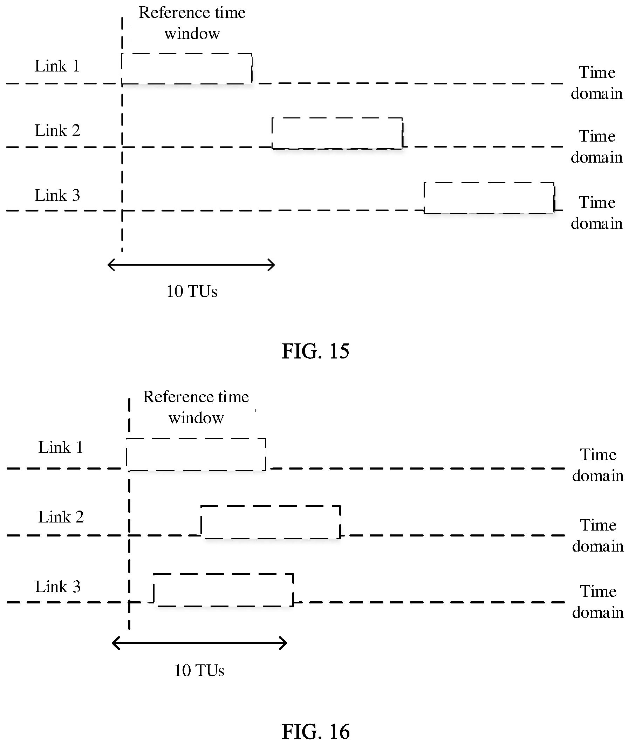

Manner 1: The time window offset information indicates different offset values by using different values, and a unit of the offset indicated by the time window offset information is 10 time units (Time unit, TU), indicating that the start time of the sensing time window is time obtained by adding a multiple of 10 TUs to the start time of the reference time window. Because the duration of the reference time window is within 10 TUs, this manner may allow sensing time windows of different links not to overlap. If working frequencies of different links in one MLD are close, sensing time windows corresponding to the links are set in a staggered manner, so that interference between the different links can be reduced. For example, Manner 1 may be shown in FIG. 15.

Manner 2: The time window offset information indicates different offset values by using different values, and a unit of the offset is 100 microseconds. The offset that is indicated in this manner and that is of the start time of the sensing time window of the corresponding link relative to the reference time window is within the duration of the reference time window. In this case, sensing time windows of different links may partially overlap. This manner may indicate a relatively flexible offset. For example, Manner 2 may be shown in FIG. 16.

Manner 3: The offset indicated by the time window offset information is a fixed value. The fixed value may be pre-defined in a protocol, or may be pre-agreed on by the first multi-link device and the second multi-link device, or may be aligned by the first multi-link device and the second multi-link device in another manner, or the like.

In a possible implementation, offset type (offset type) information may indicate whether the offset value indicated by the time window offset information adopts Manner 1 or Manner 2. For example, the offset type information may be a 1-bit field, and a value of the field is 0 or 1, indicating whether the unit of the offset indicated by the time window offset information is 10 TUs or 100 microseconds. In a possible implementation, the offset type information may also be understood as information included in the time window offset information. In this implementation, the time window offset information includes information indicating the offset value and the offset type information.

In addition, the time window offset information may further indicate that an offset of the start time of the sensing time window of the corresponding link relative to the start time of the reference time window is 0. For example, when a value of the time window offset information is 0, it may indicate that the start time of the sensing time window of the corresponding link has no offset relative to the start time of the reference time window. It may be understood that, in this case, if the sensing time window of the corresponding link reuses the duration and the periodicity of the reference time window, the sensing time window of the corresponding link is the same as the reference time window.

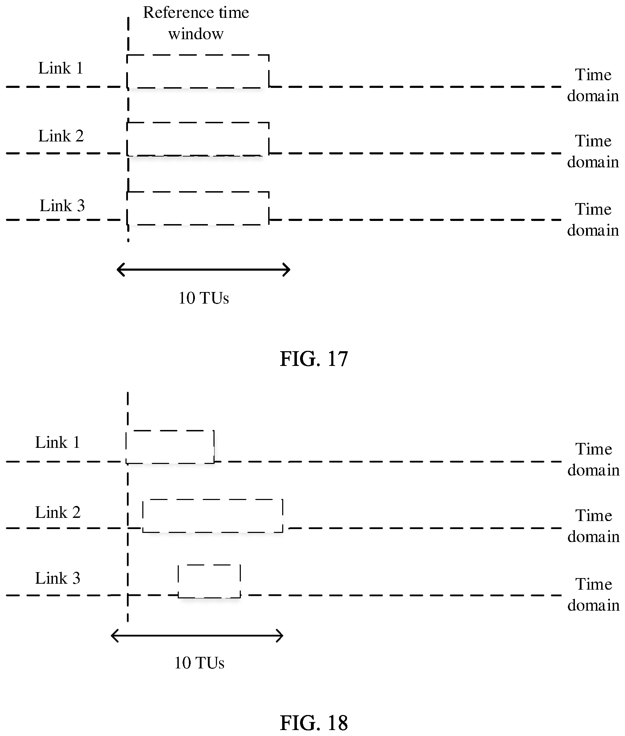

For example, FIG. 17 is a diagram in which values of time window offset information of three links are all 0, indicating that an offset of start time of a sensing time window of a corresponding link relative to the start time of the reference time window is 0. In this example, time at which the three links perform sensing measurement exchange is synchronous, which is helpful for some applications that require synchronous measurement on the plurality of links.

If the public parameter includes the reference time window information, in another possible implementation, the identification information of the part of links and time window mode information may be set for each link in the part of links. The time window mode information indicates whether the sensing time window of the corresponding link is the same as the reference time window.

If the time window mode information indicates a difference, time window offset information may be further set for the link to indicate a sensing time window of the link.

If the time window mode information indicates the same, the time window offset information may not be set for the link. Alternatively, if the time window offset information is set for the link, the second multi-link device may ignore the time window offset information corresponding to the link, and still determine that the sensing time window corresponding to the link is the same as the reference time window.

In another possible implementation, the identification information of the part of links and sensing time window information may be set for each link in the part of links. The sensing time window information indicates the sensing time window of the corresponding link. In other words, in this implementation, the sensing time window may be independently set for each link in the part of links based on the sensing time window information. It may be understood that the identification information of the part of links and the sensing time window information are specific parameters. In this implementation, the public parameter may not include the reference time window information.

Optionally, the sensing time window information may indicate the duration, the periodicity, and the start time of the sensing time window of the corresponding link.

For example, FIG. 18 is a diagram of independently setting sensing time windows for three links based on the sensing time window information. As shown in FIG. 18, start time and duration of the sensing time windows of the three links are different.

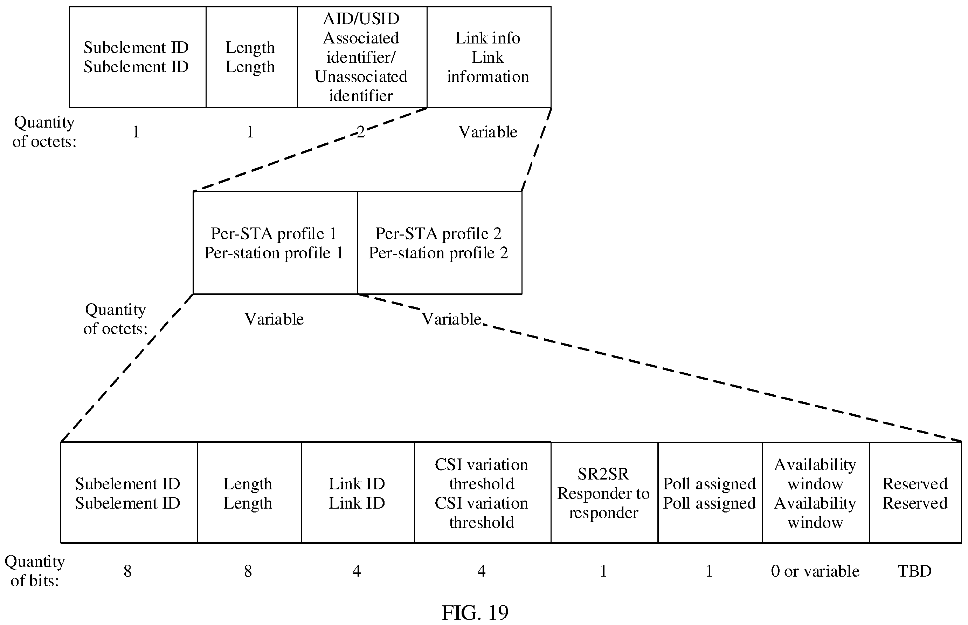

For example, when the identification information of the part of links and the sensing time window information are set for each link in the part of links, a possible structure of the TB sensing specific subelement included in the multi-link sensing subelement may be shown in FIG. 19. The link information (Link Info) includes a per-station profile (per-STA profile). The per-station profile may be a field or a subelement. If the per-station profile is a subelement, a structure of the station profile may be shown in FIG. 19. The subelement ID field indicates an ID of the per-station profile as a subelement, and the length (Per-STA Profile Length) field indicates a length of the per-station profile, for example, a quantity of octets or bits occupied by the per-station profile. If the per-station profile is a field, the subelement ID field may not be included. As shown in FIG. 19, the per-station profile may include a link ID field and an availability window field. The link ID field is the identification information of the part of links, and the availability window field is the sensing time window information, which indicates the sensing time window of the corresponding link.

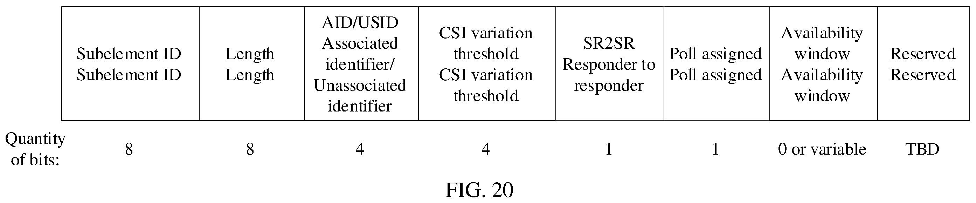

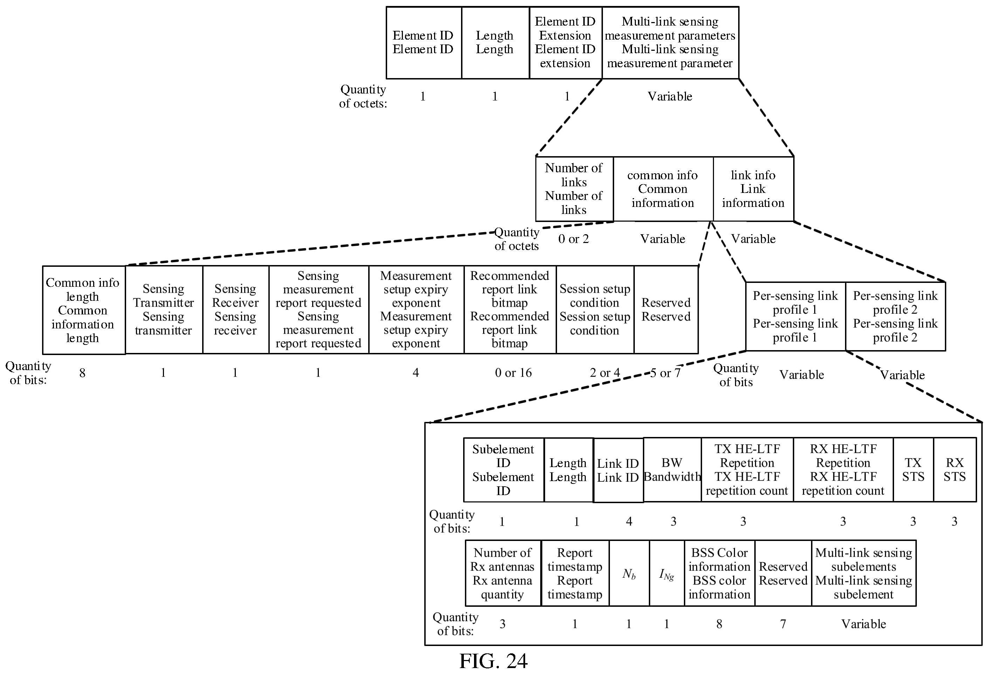

For another example, when the identification information of the part of links and the sensing time window information are set for each link in the part of links, another possible structure of the TB sensing specific subelement included in the multi-link sensing subelement may be shown in FIG. 20. The TB sensing specific subelement may include an availability window field, which indicates the sensing time window of the corresponding link. In this example, the multi-link sensing subelement may be carried in the per-station profile/sub element. In this case, the per-station profile/subelement may include another specific parameter of the corresponding link, for example, the link ID (link ID) field. For a possible example of this case, refer to a structure of the per-station profile field shown in FIG. 24. Details are described in detail below.

In another possible implementation, the identification information of the part of links and common time window indication information may be set for each link in the part of links. The common time window indication information indicates whether a sensing time window of a first link is capable of being used to determine a sensing time window of another link in the plurality of links. The first link may be any one of the plurality of links, on which a sensing time window is configured.

In this implementation, if the common time window indication information indicates that the sensing time window of the first link may be used to determine the sensing time window of the another link in the plurality of links, for the another link, the sensing time window of the first link is equivalent to the reference time window described above. On this basis, time window offset information and/or time window mode information may be set for the another link to determine the sensing time window of the another link based on the sensing time window of the first link. For specific implementation, refer to the foregoing descriptions. Details are not described herein again. In a possible implementation, in this case, if the sensing time window information is set for the another link, the second multi-link device may ignore the sensing time window information that is set for the another link, and still determine the sensing time window of the another link based on the sensing time window of the first link.

In this implementation, if the common time window indication information indicates that the sensing time window of the first link is not capable of being used to determine the sensing time window of the another link in the plurality of links, the sensing time window of the first link is used only for the first link, or is meaningful only for the first link. In this case, the sensing time window information may be set for the another link, to indicate the sensing time window corresponding to the another link. Alternatively, in this case, the public parameter may include the reference time window information, and the time window offset information is set for the another link. The time window offset information indicates an offset of the sensing time window of the another link relative to the reference time window, to determine the sensing time window of the another link.

For example, the common time window indication information may be a 1-bit field, and a value of the field is 0 or 1. When the value is 1, it indicates that the sensing time window of the first link may be used to determine the sensing time window of the another link in the plurality of links. When the value is 0, it indicates that the sensing time window of the first link is not capable of being used to determine the sensing time window of the another link in the plurality of links.

In a possible implementation, the public parameter and/or the specific parameter may be included in a sensing subelement (which may also be referred to as a multi-link sensing subelement, or may have another name; and this is not limited in this embodiment of this application). For example, the multi-link sensing subelement may include at least one of the reference time window information, the time window offset information, the time window mode information, and the common time window indication information in the foregoing embodiments.

In a possible implementation, the multi-link sensing subelement may be included in the multi-link sensing measurement parameter element. For example, FIG. 8 is a diagram of a structure of a multi-link sensing measurement parameter element. As shown in FIG. 8, the multi-link sensing subelement is a subelement in the multi-link sensing measurement parameter element.

In a possible implementation, if the multi-link sensing subelement includes the TB sensing specific subelement, the reference time window information, the time window offset information, the time window mode information, and/or the common time window indication information may be included in the TB sensing specific subelement.

The public parameter and/or the specific parameter described above may be understood as a newly added parameter compared with a sensing measurement parameter defined in the current standard. In a possible implementation, the sensing measurement parameter defined in the current standard may also be classified as a public parameter or a specific parameter based on whether the parameter is shared by the plurality of links or the parameter is dedicated to the part of links.

For example, Table 1 shows the public parameter and/or the specific parameter based on possible positions of the public parameter and/or the specific parameter in the multi-link sensing measurement request frame.

**Table 1**

| | | Specific parameter | Public parameter |
|---|---|---|---|
| Multi-link measurement (Multi-link measurement field) | sensing parameter field Sensing parameters | Bandwidth (BW), transmit end high efficiency-long training field repetition count (TX HE-LTF Repetition), receive end high efficiency-long training field repetition count (RX HE-LTF Repetition), transmit end spatial-temporal stream (TX STS), receive end spatial-temporal stream (RX STS), receive end antenna quantity (Number of Rx antennas), report timestamp (Report timestamp), bit quantity (*N_{b}*), subcarrier grouping (*I_{Ng}*), basic service set color information (BSS Color Information), and link identification information (Link ID) | Sensing transmitter (Sensing transmitter), sensing receiver (Sensing receiver), sensing measurement report requested (Sensing measurement report requested), measurement setup expiry exponent (Measurement Setup Expiry Exponent), recommended report link information (Recommended report link), session setup condition information (Session setup condition), and mandatory link information (Mandatory link) |
| Multi-link sensing subelement (Multi-link Sensing subelements) | TB sensing specific subelement (TB Sensing Specific subelement) | Channel state information variation threshold (CSI variation Threshold), sensing responder to sensing responder (SR2SR), sensing time window information (Availability window), link identification information (Link ID), time window | Poll assigned (Poll assigned), associated identifier/unassociated identifier (AID/USID), and reference time window information (Reference Availability window) |
| | | mode information (AW parameters setup mode), time window offset information (Starting time offset indication), and common time window indication information (Common AW indication) | |
| | Non-TB sensing specific subelement (Non-TB sensing Specific subelement) | Minimum time between measurements (Min time between measurements) and link identification information (Link ID) | |
| | SBP specific subelement (SBP Specific subelement) | | SBP initiator associated station identifier 12/unassociated station identifier 12 (SBP Initiator AID 12/USID 12) |

In Table 1, for the link identification information, the recommended report link information, the session setup condition information, the mandatory link information, the sensing time window information, the time window mode information, the time window offset information, the common time window indication information, and the reference time window information, refer to the foregoing descriptions. Details are not described herein again. For specific definitions of other parameters, refer to the current standard. Details are not described herein again.

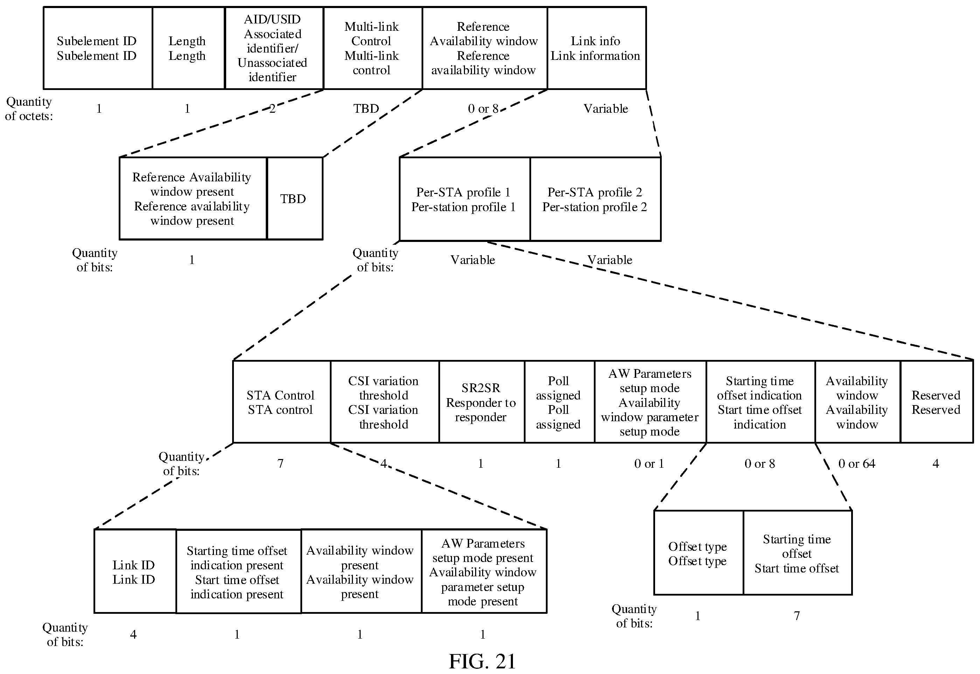

If the multi-link sensing subelement includes the TB sensing specific subelement, FIG. 21 is a diagram of a structure of an example TB sensing subelement. As shown in FIG. 21, in the TB sensing subelement, if the reference time window information (for example, a reference availability window (Reference Availability Window) field in FIG. 21) exists, the time window mode information (for example, an availability window parameter setup mode (AW Parameters Setup Mode) field in FIG. 21) and/or the time window offset (for example, a start time offset indication (Starting Time Offset Indication) field in FIG. 21) information may exist in the link information corresponding to the part of links (for example, a per-station profile (per-STA profile) 1 field included in the link information in FIG. 21).

As shown in FIG. 21, the time window offset information may include offset value indication information (for example, a start time offset indication (Starting Time Offset Indication) field in FIG. 21) and offset type (for example, an offset type (Offset Type) field in FIG. 21) information.

As shown in FIG. 21, in the TB sensing subelement, if the reference time window information does not exist, the sensing time window information (for example, an availability window (Availability Window) field in FIG. 21) may exist in the link information corresponding to the part of links. In this example, for how to determine the corresponding sensing time window for each link in the part of links, refer to the foregoing descriptions. Details are not described herein again.

For example, as shown in FIG. 21, a multi-link control (Multi-link Control) field may include a reference availability window present (Reference Availability Window Present) field, and the field may indicate that the TB sensing subelement includes the reference availability window field.

For another example, a STA control (STA Control) field in the per-station profile 1 field may include a link ID field, a start time offset indication present (Starting Time Offset Indication Present) field, an availability window present (Availability Window Present) field, and an availability window parameter setup mode present (AW Parameters Setup Mode Present) field. The link ID field indicates a link corresponding to the per-station profile 1 field, the start time offset indication present field indicates that the per-station profile 1 field includes the start time offset indication field, the availability window present field indicates that the per-station profile 1 field includes the availability window field, and the availability window parameter setup mode present field indicates that the per-station profile 1 field includes the availability window parameter setup mode field.

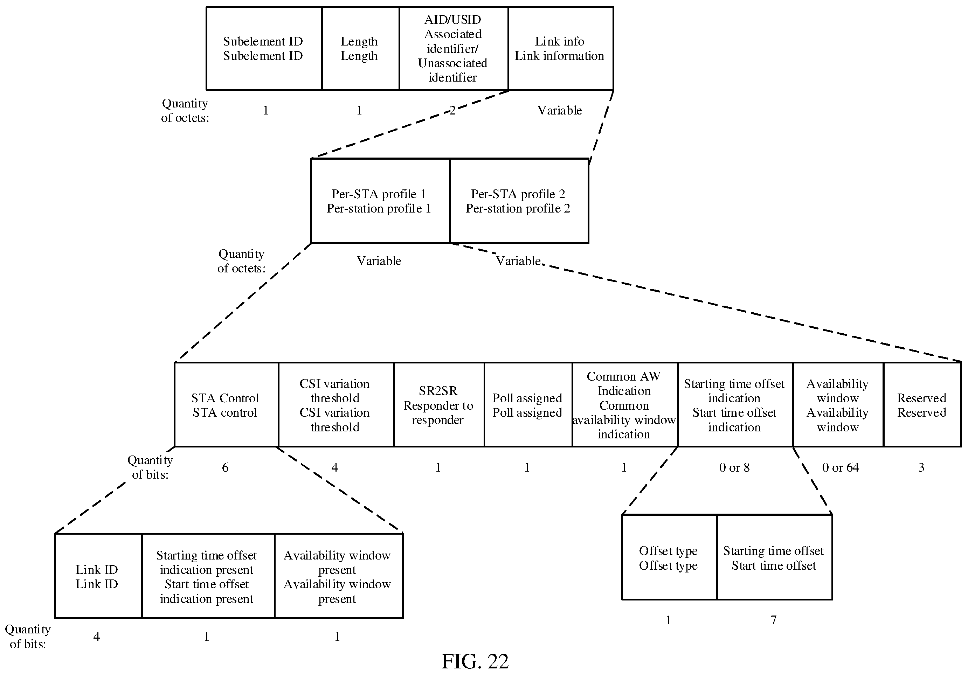

If the multi-link sensing subelement includes the TB sensing specific subelement, FIG. 22 is a diagram of a structure of another example TB sensing subelement. As shown in FIG. 22, in the TB sensing subelement, the common time window indication information (for example, a common availability window indication (Common AW indication) field in FIG. 22) and the sensing time window information (for example, an availability window (Availability Window) field in FIG. 22) may exist in link information corresponding to the first link. The sensing time window information indicates the sensing time window of the first link. It is assumed that the sensing time window that is of the first link and that is indicated by the common time window indication information is capable of being used to determine the sensing time window of the another link in the plurality of links. In this case, the time window offset information (where the time window offset information may include the offset value indication information (for example, a start time offset indication (Starting Time Offset Indication) field in FIG. 22) and the offset type (for example, an offset type (Offset Type) field in FIG. 18) information) may exist in link information corresponding to the another link, to indicate an offset of start time of the sensing time window of the another link relative to start time of the sensing time window of the first link. It is assumed that the sensing time window that is of the first link and that is indicated by the common time window indication information is not capable of being used to determine the sensing time window of the another link in the plurality of links. In this case, the sensing time window information may exist in link information corresponding to the another link, to indicate the sensing time window of the another link.

For example, as shown in FIG. 22, a STA control (STA Control) field in the per-station profile 1 field may include a link ID field, a start time offset indication present (Starting Time Offset Indication Present) field, and an availability window present (Availability Window Present) field. The link ID field indicates a link corresponding to the per-station profile 1 field, the start time offset indication present field indicates that the per-station profile 1 field includes the start time offset indication field, and the availability window present field indicates that the per-station profile 1 field includes the availability window field.

In a possible implementation, the per-station profile (for example, the per-station profile included in the TB sensing subelement shown in FIG. 21 or FIG. 22) included in the TB sensing specific subelement may be a field or a subelement. If the per-station profile is a subelement, the per-station profile may include a subelement ID field and a length (length) field. The subelement ID field indicates an ID of the per-station profile as a subelement, and the length field indicates a length of the per-station profile, for example, a total quantity of octets/bits occupied by the per-station profile.

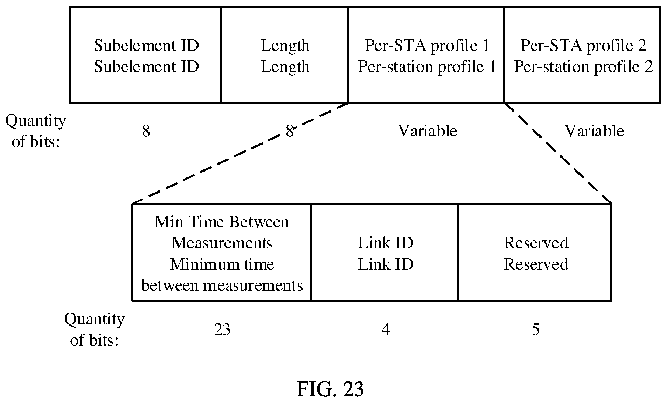

If the multi-link sensing subelement includes the non-TB sensing specific subelement, FIG. 23 is a diagram of a structure of an example non-TB sensing specific subelement. The link identification information and the minimum time between measurements (Min time between measurements) each are a specific parameter of each link in the part of links. Alternatively, a structure of the non-TB sensing specific subelement may be the same as a structure of the non-TB sensing specific subelement in the existing standard.

In a possible implementation, the multi-link sensing subelement and the multi-link sensing measurement parameter field in the multi-link sensing measurement request frame may be mutually independent information in the multi-link sensing measurement parameter element. For example, in this case, a structure of the multi-link sensing measurement parameter element may be shown in FIG. 8. Alternatively, in the multi-link sensing measurement parameter element, the multi-link sensing subelement may be included in the multi-link sensing measurement parameter field. For example, in this case, a structure of the multi-link sensing measurement parameter element may be shown in FIG. 24. The multi-link sensing subelement may be understood as a specific parameter as a whole, and is carried in link information corresponding to each link in the part of links. For specific meanings of fields or elements in FIG. 24, refer to the foregoing descriptions. Details are not described herein again.

In the structure shown in FIG. 8 or FIG. 24, a structure of the TB sensing specific subelement included in the multi-link sensing subelement may be shown in FIG. 21 or FIG. 22. The non-TB sensing specific subelement included in the multi-link sensing subelement may be shown in FIG. 23, or may have a same structure as the non-TB sensing specific subelement in the existing standard.

In a possible implementation, in the structure shown in FIG. 24, the multi-link sensing measurement parameter field may not include a number of links field.

In a possible implementation, in the structure shown in FIG. 24, a length of the common information field may be a fixed value, and the fixed value may be preset, defined in a protocol, or pre-agreed on by the first multi-link device and the second multi-link device, for example, may be 2 octets (namely, 16 bits). Alternatively, the length of the common information field may be variable (variable). In this case, the common information may include a length (length) field, to indicate a length of the common information, for example, a total quantity of octets/bits occupied by the common information.

In a possible implementation, in the structure shown in FIG. 24, the per-station profile included in the link information may be a field or a subelement. If the per-station profile is a subelement, the per-station profile may further include a subelement ID field and a length (length) field. The subelement ID field indicates an ID of the per-station profile as a subelement, and the length field indicates a length of the per-station profile, for example, a total quantity of octets/bits occupied by the per-station profile.

In a possible implementation, if the link information includes a plurality of sensing link profile subelements, subelement IDs of per-station profile subelements may be different.

In a possible implementation, the multi-link sensing measurement request frame may include recommended link information. The recommended link information indicates one link or a plurality of links used by the second multi-link device to send a sensing measurement query frame. The sensing measurement query frame indicates that the second multi-link device requests to participate in sensing measurement.

In this optional solution, the first multi-link device may be an AP MLD. The second multi-link device may be an unassociated non-AP MLD (unassociated non-AP MLD). That the second multi-link device is the unassociated non-AP MLD means that the second multi-link device is not associated with the first multi-link device, and cannot receive some information broadcast by the first multi-link device. In this case, the first multi-link device does not know a sensing capability of the second multi-link device. Therefore, the second multi-link device needs to first send the sensing measurement query frame to the first multi-link device, to notify the first multi-link device of the sensing capability of the second multi-link device, and indicate the second multi-link device to request to participate in sensing measurement. After receiving the sensing measurement query frame, the first multi-link device may determine, according to a situation, whether to initiate sensing measurement. If the first multi-link device currently does not expect the second multi-link device to participate in sensing measurement or cannot allow the second multi-link device to participate in sensing measurement, but expects the second multi-link device to participate in sensing measurement after a period of time, the first multi-link device may send the multi-link sensing measurement request frame including the recommended link information to the second multi-link device through a current link (namely, the link used by the second multi-link device to send the sensing measurement query frame). After receiving the multi-link sensing measurement request frame, the second multi-link device may send a sensing measurement query frame to the first multi-link device again through the link indicated by the recommended link information, to request to participate in sensing measurement again.

In a possible implementation, if the multi-link sensing measurement request frame sent by the first multi-link device does not include the recommended link information, the second multi-link device may send a sensing measurement query frame again through a link on which the sensing measurement query frame is sent previously (namely, a link on which the multi-link sensing measurement request frame from the first multi-link device is received).

For example, the recommended link information may be a recommended link ID (Recommended Link ID) field or a recommended link ID bitmap (Recommended Link bitmap) field. A quantity of bits occupied by the recommended link information may be a fixed value, for example, 4 bits, or the quantity of occupied bits may be variable.

In a possible implementation, if the recommended link information indicates a link, the recommended link information may occupy a fixed quantity of bits, for example, may occupy 4 bits. Alternatively, if the recommended link information indicates a plurality of links, the recommended link information may occupy a variable quantity of bits.

In a possible implementation, the recommended link information may be carried in sensing comeback information. For example, the sensing comeback information may be a sensing comeback information (Sensing Comeback info) field.

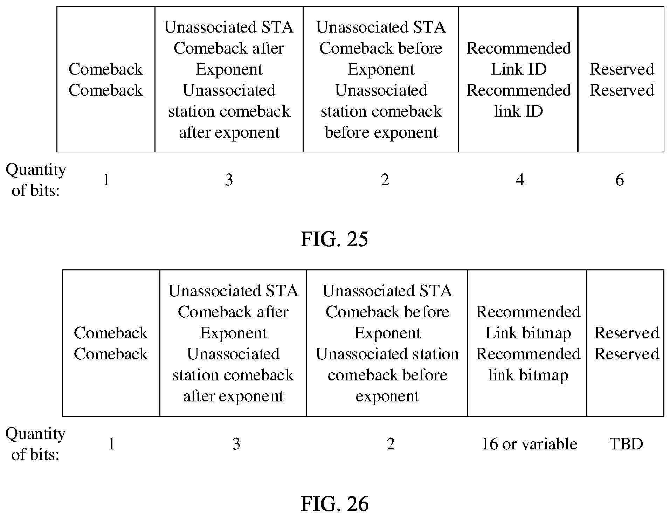

For example, a possible structure of the sensing comeback information may be shown in FIG. 25. The recommended link information may be a 4-bit recommended link ID shown in FIG. 25. If n link IDs are indicated, the recommended link information occupies 4n bits.

Alternatively, another possible structure of the sensing comeback information may be shown in FIG. 26. The recommended link information may be a recommended link bitmap shown in FIG. 26, and a size of the recommended link bitmap may be 16 bits, or may be variable.

For example, the recommended link information may indicate a MAC address of a recommended link by using 6 octets. If n MAC addresses are indicated, the recommended link information occupies 6n octets.

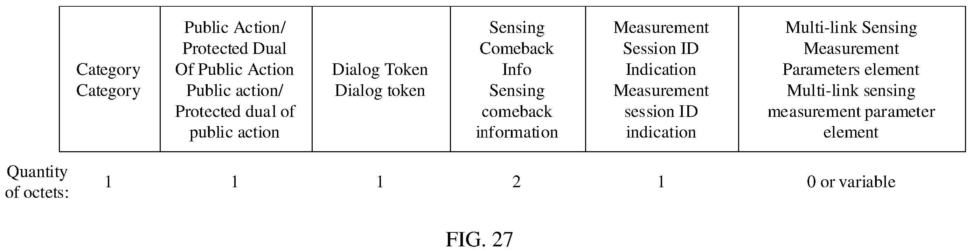

In a possible implementation, the foregoing described embodiment in which the multi-link sensing measurement request frame includes the recommended link information and the foregoing described embodiment in which the multi-link sensing measurement request frame includes the public parameter and/or the specific parameter may be applied in a combination or may be applied independently. If the foregoing described embodiments are applied in a combination, a possible structure of the multi-link sensing measurement request frame including the sensing comeback information and the multi-link sensing measurement parameter element may be shown in FIG. 27. The sensing comeback information may include the recommended link information. The multi-link sensing measurement parameter element may include the public parameter and/or the specific parameter. For details, refer to the foregoing descriptions. Details are not described herein again.

In S702, after receiving the multi-link sensing measurement request frame from the first multi-link device, the second multi-link device may feed back the multi-link sensing measurement response frame to the first multi-link device. The multi-link sensing measurement response frame may indicate whether the second multi-link device supports setup of the sensing measurement session.

In a possible implementation, the multi-link sensing measurement response frame may include first indication information. The first indication information may indicate that a plurality of links included in the second multi-link device all support setup of the sensing measurement session. Alternatively, the first indication information may indicate that a part of links in a plurality of links included in the second multi-link device supports setup of the sensing measurement session. In this case, the multi-link sensing measurement request frame may further include second indication information, and the second indication information includes identification information of the part that is of links and that supports setup of the sensing measurement session, for example, may include a link ID. Alternatively, the first indication information may indicate that the second multi-link device rejects to set up the sensing measurement session, and the multi-link sensing measurement response frame includes the multi-link sensing measurement parameter expected by the second multi-link device. Alternatively, the first indication information may indicate that the second multi-link device rejects to set up the sensing measurement session, and the multi-link sensing measurement response frame does not include the multi-link sensing measurement parameter expected by the second multi-link device.

In a possible implementation, that the first indication information indicates that the part of links in the plurality of links included in the second multi-link device supports setup of the sensing measurement session may occur in the following scenario: The multi-link sensing measurement request frame includes the session setup condition information; and if the part of links in the plurality of links included in the second multi-link device may accept the condition indicated by the session setup condition information, the sensing measurement session may be set up. For example, it is assumed that the session setup condition information indicates that not all links requested by the first multi-link device are necessary. In this case, if the second multi-link device may accept sensing measurement parameters corresponding to greater than or equal to 50% links in all the links requested by the first multi-link device, the sensing measurement session can be successfully set up. If more than 50% links in the plurality of links included in the second multi-link device may accept corresponding sensing measurement parameters, in the multi-link sensing measurement response frame fed back by the second multi-link device, the first indication information may indicate that the part of links in the plurality of links included in the second multi-link device supports setup of the sensing measurement session. Further, the multi-link sensing measurement response frame may further include the second indication information, and the second indication information includes identification information of a plurality of links that can accept corresponding sensing measurement parameters.

For example, the first indication information may be carried in a status code (status code) field.

For example, the second indication information may be an accepted link ID bitmap (Accepted link ID bitmap) field. The field may occupy a fixed quantity of bits, for example, 2 octets (namely, 16 bits), or the quantity of bits occupied by the field may be variable. For example, the quantity of bits occupied by the second indication information may be changed based on a quantity of accepted links.

For example, when the status code field is set to SUCCESS, it may indicate that all the plurality of links included in the second multi-link device support setup of the sensing measurement session. When the status code field is set to PARTIALLY_ACCEPTED, it may indicate that the part of links in the plurality of links included in the second multi-link device supports setup of the sensing measurement session. When the status code field is set to REJECTED_WITH_SUGGESTED_CHANGE, it may indicate that the second multi-link device rejects to set up the sensing measurement session, and the multi-link sensing measurement response frame includes the multi-link sensing measurement parameter expected by the second multi-link device. When the status code field is set to REQUEST_DECLINED, the first indication information may indicate that the second multi-link device rejects to set up the sensing measurement session, and the multi-link sensing measurement response frame does not include the multi-link sensing measurement parameter expected by the second multi-link device.

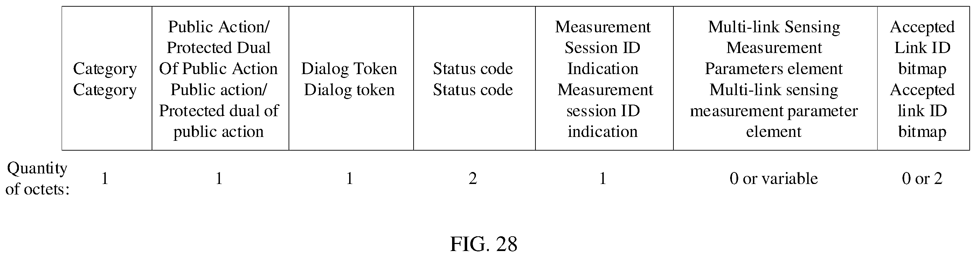

An example structure of the multi-link sensing measurement response frame in S702 may be shown in FIG. 28. The status code field indicates that the part of links in the plurality of links included in the second multi-link device supports setup of the sensing measurement session. The accepted link ID bitmap field includes identification information of the part that is of links and that supports setup of the sensing measurement session.

The foregoing mainly describes the solutions provided in embodiments of this application from a perspective of interaction between network elements. Correspondingly, an embodiment of this application further provides a communication apparatus. The communication apparatus is configured to implement the foregoing methods. The communication apparatus may be the first multi-link device in the foregoing method embodiments, or an apparatus including the first multi-link device, or a component that can be used in the first multi-link device. Alternatively, the communication apparatus may be the second multi-link device in the foregoing method embodiments, or an apparatus including the second multi-link device, or a component that may be used in the second multi-link device. It may be understood that, to implement the foregoing functions, the communication apparatus includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be understood that division into modules in embodiments of this application is an example, and is merely logical function division. During actual implementation, there may be another division manner.

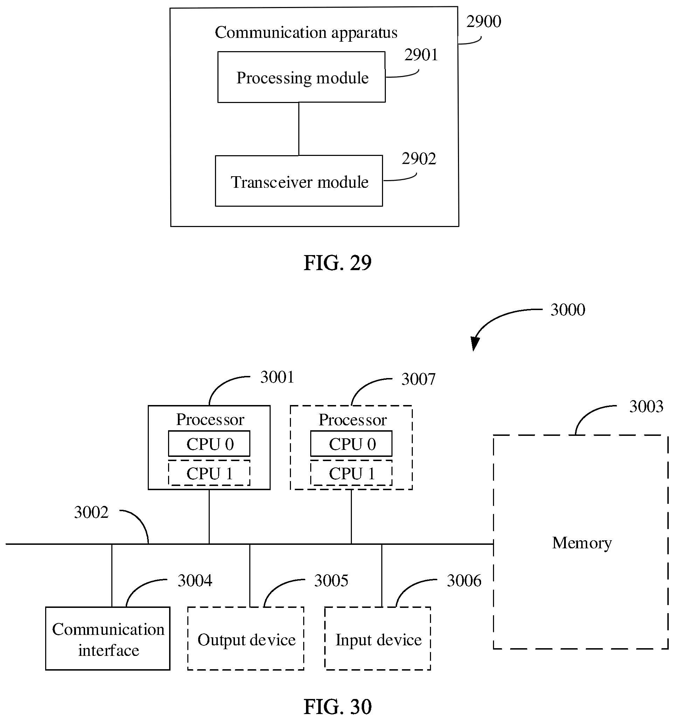

FIG. 29 is a diagram of a structure of a communication apparatus 2900. The communication apparatus 2900 includes a transceiver module 2902. In a possible implementation, the communication apparatus 2900 includes a processing module 2901. The transceiver module 2902 may also be referred to as a transceiver unit, and is configured to implement receiving and sending functions, for example, may be a transceiver circuit, a transceiver machine, a transceiver, or a communication interface.

The communication apparatus 2900 may be the first multi-link device in the foregoing embodiments. The processing module 2901 is configured to perform data processing operations of the first multi-link device in the foregoing embodiments. The transceiver module 2902 is configured to perform data receiving and sending operations of the first multi-link device in the foregoing embodiments. Alternatively, the communication apparatus 2900 may be the second multi-link device in the foregoing embodiments. The processing module 2901 is configured to perform data processing operations of the second multi-link device in the foregoing embodiments. The transceiver module 2902 is configured to perform data receiving and sending operations of the second multi-link device in the foregoing embodiments.

For example, the communication apparatus 2900 is the first multi-link device in the foregoing embodiments. In a possible implementation:
the transceiver module 2902 is configured to send a multi-link sensing measurement request frame to a second multi-link device, where the multi-link sensing measurement request frame is used to request to set up a sensing measurement session, and the sensing measurement session includes one link or a plurality of links; and the transceiver module 2902 is further configured to receive a multi-link sensing measurement response frame from the second multi-link device.

For example, the communication apparatus 2900 is the second multi-link device in the foregoing embodiments. In a possible implementation:
the transceiver module 2902 is configured to receive a multi-link sensing measurement request frame from a first multi-link device, where the multi-link sensing measurement request frame is used to request to set up a sensing measurement session, and the sensing measurement session includes one link or a plurality of links; and the transceiver module 2902 is further configured to send a multi-link sensing measurement response frame to the first multi-link device.

All related content of the steps in the foregoing method embodiments may be cited in function descriptions of the corresponding functional modules. Details are not described herein again.

In a possible implementation, the module in FIG. 29 may also be referred to as a unit. For example, the processing module may be referred to as a processing unit, and the transceiver module may be referred to as a transceiver unit.

In addition, in the embodiment shown in FIG. 29, a name of each unit may not be the name shown in the figure. For example, the transceiver module may also be referred to as a communication module or a communication unit.

When each unit in FIG. 29 is implemented in a form of a software functional module and is sold or used as an independent product, the unit may be stored in a computer-readable storage medium. Based on such an understanding, the technical solutions in embodiments of this application essentially, or the part contributing to the conventional technology, or all or a part of the technical solutions may be implemented in a form of a software product. The computer software product is stored in a storage medium and includes several instructions for instructing a computer device (which may be a personal computer, a server, or a network device) or a processor (processor) to perform all or some of the steps of the methods in embodiments of this application. A storage medium for storing the computer software product includes any medium that can store program code, such as a USB flash drive, a removable hard disk, a read-only memory (read-only memory, ROM), a random access memory (random access memory, RAM), a magnetic disk, or an optical disc.

In embodiments of this application, the communication apparatus 2900 is presented in a form of obtaining each functional module through division in an integrated manner. The "module" herein may be an ASIC, a circuit, a processor that executes one or more software or firmware programs, a memory, an integrated logic circuit, and/or another component that can provide the foregoing functions. In a simple embodiment, a person skilled in the art may figure out that the communication apparatus 2900 may be in a form of the communication apparatus shown in FIG. 30.

As shown in FIG. 30, the communication apparatus 3000 includes one or more processors 3001, a communication line 3002, and at least one communication interface (in FIG. 30, only an example in which a communication interface 3004 and one processor 3001 are included is used for description). Optionally, a memory 3003 may be further included.

The processor 3001 may be a general-purpose central processing unit (central processing unit, CPU), a microprocessor, an application-specific integrated circuit (application-specific integrated circuit, ASIC), or one or more integrated circuits configured to control execution of programs in the solutions in this application.

The communication line 3002 may include a path, and is configured to connect different components.

The communication interface 3004 may be a transceiver module, and is configured to communicate with another device or a communication network such as the Ethernet, a RAN, a terminal, or a wireless local area network (wireless local area network, WLAN). For example, the transceiver module may be an apparatus such as a transceiver or a transceiver machine. Optionally, the communication interface 3004 may alternatively be a transceiver circuit or an input/output interface located in the processor 3001, and is configured to implement signal input and signal output of the processor.

The memory 3003 may be an apparatus with a storage function. For example, the memory 3003 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction or data structure and that is accessible to a computer, but is not limited thereto. The memory may exist independently, and is connected to the processor through the communication line 3002. The memory may alternatively be integrated with the processor.

The memory 3003 is configured to store computer-executable instructions for performing the solutions in this application, and the processor 3001 controls execution. The processor 3001 is configured to execute the computer-executable instructions stored in the memory 3003, to implement the communication method provided in embodiments of this application.

Alternatively, optionally, in embodiments of this application, the processor 3001 may perform processing-related functions in communication methods provided in the foregoing embodiments of this application, and the communication interface 3004 is responsible for communication with another device or a communication network. This is not specifically limited in this embodiment of this application.

Optionally, the computer-executable instructions in this embodiment of this application may also be referred to application code. This is not specifically limited in this embodiment of this application.

During specific implementation, in an embodiment, the processor 3001 may include one or more CPUs, for example, a CPU 0 and a CPU 1 in FIG. 30.

During specific implementation, in an embodiment, the communication apparatus 3000 may include a plurality of processors, for example, the processor 3001 and a processor 3007 in FIG. 30. Each of these processors may be a single-core (single-core) processor, or may be a multi-core (multi-core) processor. The processor herein may include but is not limited to at least one of the following: various compute devices that run software, such as a central processing unit (central processing unit, CPU), a microprocessor, a digital signal processor (DSP), a microcontroller unit (microcontroller unit, MCU), or an artificial intelligence processor. Each compute device may include one or more cores for executing software instructions to perform an operation or processing.

During specific implementation, in an embodiment, the communication apparatus 3000 may further include an output device 3005 and an input device 3006. The output device 3005 communicates with the processor 3001, and may display information in a plurality of manners. For example, the output device 3005 may be a liquid crystal display (liquid crystal display, LCD), a light-emitting diode (light-emitting diode, LED) display device, a cathode ray tube (cathode ray tube, CRT) display device, or a projector (projector). The input device 3006 communicates with the processor 3001, and may receive an input from a user in a plurality of manners. For example, the input device 3006 may be a mouse, a keyboard, a touchscreen device, or a sensing device.

The communication apparatus 3000 may also be referred to as a communication device sometimes, and may be a general-purpose device or a dedicated device. For example, the communication apparatus 3000 may be a desktop computer, a portable computer, a network server, a palmtop computer (personal digital assistant, PDA), a mobile phone, a tablet computer, a wireless terminal device, an embedded device, or a device having a structure similar to that in FIG. 30. A type of the communication apparatus 3000 is not limited in this embodiment of this application.

In addition, a composition structure shown in FIG. 30 does not constitute a limitation on the communication apparatus. In addition to the components shown in FIG. 30, the communication apparatus 3000 may include more or fewer components than those shown in the figure, or some components may be combined, or different component arrangements may be used.

The processor 3001 in the communication apparatus 3000 shown in FIG. 30 may invoke the computer-executable instructions stored in the memory 3003, to enable the communication apparatus 3000 to perform the communication method in the foregoing method embodiments.

Specifically, functions/implementation processes of the transceiver module 2902 and the processing module 2901 in FIG. 29 may be implemented by the processor 3001 in the communication apparatus 3000 shown in FIG. 30 by invoking the computer-executable instructions stored in the memory 3003. Alternatively, a function/an implementation process of the processing module 2901 in FIG. 29 may be implemented by the processor 3001 in the communication apparatus 3000 shown in FIG. 30 by invoking the computer-executable instructions stored in the memory 3003, and a function/an implementation process of the transceiver module 2902 in FIG. 29 may be implemented by the communication interface 3004 in the communication apparatus 3000 shown in FIG. 30.

It should be understood that one or more of the modules or units may be implemented by software, hardware, or a combination thereof. When any one of the modules or units is implemented by software, the software exists in a form of computer program instructions, and is stored in a memory, and a processor may be configured to execute the program instructions and implement the foregoing method procedures. The processor may be built into a SoC or an ASIC, or may be an independent semiconductor chip. In addition to a core that is configured to execute the software instructions to perform an operation or processing, the processor may further include a necessary hardware accelerator, for example, a field programmable gate array (field programmable gate array, FPGA), a programmable logic device (programmable logic device, PLD), or a logic circuit that implements a special logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a communication apparatus (for example, the communication apparatus may be a chip or a chip system). The communication apparatus includes a processor, and is configured to implement the method in any one of the foregoing method embodiments. In a possible design, the communication apparatus further includes a memory. The memory is configured to store necessary program instructions and necessary data. The processor may invoke program code stored in the memory, to indicate the communication apparatus to perform the method in any one of the foregoing method embodiments. Certainly, the communication apparatus may not include a memory. When the communication apparatus is a chip system, the communication apparatus may include a chip, or may include a chip and another discrete device. This is not specifically limited in this embodiment of this application.

In a possible implementation, an embodiment of this application further provides a computer-readable storage medium. The computer-readable storage medium stores a computer program or instructions. When the computer program or the instructions are run on a communication apparatus, the communication apparatus is enabled to perform the method in any one of the foregoing method embodiments or the foregoing implementations.

In a possible implementation, an embodiment of this application further provides a communication system. The communication system includes the second multi-link device in the foregoing method embodiments and the first multi-link device in the foregoing method embodiments.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

## Claims

1. A communication method, applied to a first multi-link device, wherein the method comprises:
sending a multi-link sensing measurement request frame to a second multi-link device, wherein the multi-link sensing measurement request frame is used to request to set up a sensing measurement session, and the sensing measurement session comprises one link or a plurality of links; and
receiving a multi-link sensing measurement response frame from the second multi-link device.

2. A communication method, applied to a second multi-link device, wherein the method comprises:
receiving a multi-link sensing measurement request frame from a first multi-link device, wherein the multi-link sensing measurement request frame is used to request to set up a sensing measurement session, and the sensing measurement session comprises one link or a plurality of links; and
sending a multi-link sensing measurement response frame to the first multi-link device.

3. The method according to claim 1 or 2, wherein the multi-link sensing measurement request frame comprises a sensing measurement parameter, and the sensing measurement parameter comprises a public parameter and/or a specific parameter, wherein the public parameter is a parameter shared by the link or the plurality of links, and the specific parameter is a dedicated parameter of a part of links in the link or the plurality of links.

4. The method according to claim 3, wherein the public parameter comprises recommended report link information, and the recommended report link information indicates a link for reporting sensing data.

5. The method according to claim 3 or 4, wherein the public parameter comprises session setup condition information, and the session setup condition information indicates a condition for successfully setting up the sensing session.

6. The method according to claim 5, wherein the public parameter comprises mandatory link information, and the mandatory link information indicates a mandatory link for successfully setting up the sensing session.

7. The method according to any one of claims 3 to 6, wherein the specific parameter comprises identification information of the part of links.

8. The method according to claim 1 or 2, wherein the multi-link sensing measurement request frame comprises a sensing subelement, and the sensing subelement comprises a public parameter and/or a specific parameter, wherein the public parameter is a parameter shared by the plurality of links, and the specific parameter is a dedicated parameter of a part of links in the plurality of links.

9. The method according to claim 8, wherein the public parameter comprises reference time window information, and the reference time window is used to determine a sensing time window of each of the link or the plurality of links, wherein the sensing time window is used to perform sensing measurement exchange.

10. The method according to claim 8, wherein the specific parameter comprises:
identification information of the part of links and sensing time window information corresponding to each link in the part of links, wherein the sensing time window is used to perform sensing measurement exchange.

11. The method according to claim 8 or 9, wherein the public parameter comprises the reference time window information; and
the specific parameter comprises identification information of the part of links and time window offset information, and the time window offset information indicates an offset of the sensing time window of the part of links relative to the reference time window.

12. The method according to claim 8 or 9, wherein the public parameter comprises the reference time window information; and
the specific parameter comprises identification information of the part of links and time window mode information, wherein the time window mode information indicates whether the sensing time window of the part of links is the same as the reference time window.

13. The method according to claim 8, wherein the specific parameter comprises:
identification information of the part of links and common time window indication information, and the common time window indication information indicates whether a sensing time window of a first link is capable of being used to determine a sensing time window of another link in the plurality of links.

14. The method according to any one of claims 1 to 13, wherein the multi-link sensing measurement request frame comprises recommended link information, and the recommended link information indicates one link or a plurality of links used by the second multi-link device to send a sensing measurement query frame, wherein the sensing measurement query frame indicates that the second multi-link device requests to participate in sensing measurement.

15. The method according to claim 14, wherein the recommended link information is carried in a sensing comeback information field.

16. The method according to any one of claims 1 to 15, wherein
the multi-link sensing measurement response frame comprises first indication information and second indication information, wherein the first indication information indicates that a part of links in a plurality of links comprised in the second multi-link device supports setup of the sensing measurement session, and the second indication information comprises identification information of the part that is of links and that supports setup of the sensing measurement session.

17. The method according to claim 16, wherein the first indication information is carried in a status code field.

18. The method according to any one of claims 1 to 17, wherein the first multi-link device is an access point multi-link device, and the second multi-link device is a non-access point multi-link device; or
the first multi-link device is a non-access point multi-link device, and the second multi-link device is an access point multi-link device.

19. A communication apparatus, comprising a module configured to perform the method according to claim 1 or any one of claims 3 to 18.

20. A communication apparatus, comprising a module configured to perform the method according to claim 2 or any one of claims 3 to 18.

21. A communication apparatus, wherein the communication apparatus comprises a processor and a memory, and the memory is configured to store computer instructions; and when the processor executes the instructions, the communication apparatus is enabled to perform the method according to claim 1 or any one of claims 3 to 18.

22. A communication apparatus, wherein the communication apparatus comprises a processor and a memory, and the memory is configured to store computer instructions; and when the processor executes the instructions, the communication apparatus is enabled to perform the method according to claim 2 or any one of claims 3 to 18.

23. A computer-readable storage medium, wherein the computer-readable storage medium comprises a computer program or instructions; and when the computer program or the instructions are run by a processor, an apparatus comprising the processor is enabled to perform the method according to any one of claims 1 to 18.

24. A computer program product, wherein the computer program product comprises instructions; and when the instructions are run by a processor, an apparatus comprising the processor is enabled to perform the method according to any one of claims 1 to 18.

25. A chip, wherein the chip comprises a processor, and the processor is configured to run instructions, to enable an apparatus comprising the chip to perform the method according to any one of claims 1 to 18.
